# EUROPÄISCHE PATENTANMELDUNG

(11) **EP 3 711 900 A1**
(43) Veröffentlichungstag der Anmeldung: **23.09.2020**
(21) Anmeldenummer: 20161976.4
(22) Anmeldetag: 10.03.2020
(51) Int. Cl.: B23Q 39/04, B23Q 1/48, B24B 3/24

(54) **VORRICHTUNG UND VERFAHREN ZUM BEARBEITEN VON GLEICHARTIGEN WERKSTÜCKEN**

(30) Priorität: 22.03.2019 DE 102019002054
(71) Anmelder: VOLLMER WERKE Maschinenfabrik GmbH, 88400 Biberach/Riss (DE)
(72) Erfinder: Bott, Joachim, 88454 88454 Hochdorf (DE); Braig, Rainer, 88400 88400 Biberach (DE); Sägmüller, Manfred, 88444 Ummendorf (DE)
(74) Vertreter: Thum, Bernhard

(57) **Zusammenfassung**

Die vorliegende Erfindung betrifft eine Vorrichtung (10) zum Bearbeiten von gleichartigen Werkstücken (28, 30) in einer Bearbeitungsposition, insbesondere zum Schärfen von Werkstücken (28, 30) mit Schneiden für die spanabhebende Bearbeitung, wie beispielsweise Bohrer, Fräser oder dergleichen,
wobei jedes Werkstück (28, 30) eine Werkstückachse und einen bezüglich der Werkstückachse vordefinierten Referenzpunkt (RP1, RP2) aufweist,
wobei die Vorrichtung (10) umfasst:
eine Werkstückträgeranordnung (12) mit einer Mehrzahl von Werkstückträgern (24, 26), wobei jeder Werkstückträger (24, 26) dazu ausgebildet ist, jeweils eines der gleichartigen Werkstücke (28, 30) aufzunehmen, wobei jeder Werkstückträger (24, 26) jeweils eine Werkstückträgerachse (A1, A2) aufweist, wobei jedes Werkstück (28, 30) im zugeordneten Werkstückträger (24, 26) derart aufnehmbar ist, dass die Werkstückträgerachse (A1, A2) und die Werkstückachse im Wesentlichen zusammenfallen,
wobei die Werkstückträgerachsen (A1, A2) der Mehrzahl von Werkstückträgern (24, 26) in vorbestimmter Ausrichtung zueinander angeordnet sind, und
eine Werkzeugträgeranordnung (14) mit einer Mehrzahl von Werkzeugträgern (32, 34), wobei jeder Werkzeugträger (32, 34) dazu ausgebildet ist, ein Bearbeitungswerkzeug (36, 38) aufzunehmen, und wobei die Werkzeugträger (32, 34) jeweils eine Werkzeugträgerachse (L1, L2) aufweisen, und wobei die Werkzeugträgerachsen (L1, L2) in vorbestimmter Ausrichtung zueinander angeordnet sind,
wobei die Vorrichtung (10) dazu ausgebildet ist, beim Aufnehmen der Werkstücke (28, 30) in den zugeordneten Werkstückträgern (24, 26) der Werkstückträgeranordnung (12) die Referenzpunkte (RP1, RP2) der Werkstücke (28, 30) relativ zueinander bezüglich der Werkstückträgerachsen (A1, A2) im Wesentlichen einheitlich auszurichten.

## Beschreibung

Die vorliegende Erfindung betrifft eine Vorrichtung und ein Verfahren zum Bearbeiten von gleichartigen Werkstücken in einer Bearbeitungsposition, insbesondere zum Schärfen von Werkstücken mit Schneiden für die spanabhebende Bearbeitung, wie beispielsweise Bohrer, Fräser oder dergleichen.

Dem Schärfen von Werkstücken in der Form von Bearbeitungswerkzeugen, die für unterschiedliche Bearbeitungsaufgaben eingesetzt werden, kommt große Bedeutung zu. Die zunehmende Komplexität der Geometrie von Bearbeitungswerkzeugen, die beispielsweise die spanabhebende Bearbeitung mehrerer Flächen eines Werkstücks aus harten Materialien in einem einzigen Arbeitsschritt ermöglichen, führt zu erheblichen Anschaffungskosten derartiger Bearbeitungswerkzeuge. Vor diesem Hintergrund ist es erstrebenswert, derartige Bearbeitungswerkzeuge möglichst lange zu nutzen. Dazu ist es erforderlich, neben dem erstmaligen Schärfen bei der Herstellung der Bearbeitungswerkzeuge deren Schneiden auch regelmäßig nachzuschärfen, um ein maßhaltiges Bearbeiten der Werkstücke zu gewährleisten. Eine solche Bearbeitungsaufgabe zum erstmaligen Schärfen und zum Nachschärfen von Bearbeitungswerkzeugen, die bei der Schärfbearbeitung als "Werkstücke" bearbeitet werden, wird oftmals durch Schleifen vollzogen. Allerdings kommen auch zunehmend andere Bearbeitungsverfahren bei der Schärfebearbeitung zum Einsatz, wie beispielsweise die Erodierbearbeitung oder die Laserbearbeitung.

DE 10 2012 010 689 A1 offenbart eine Vorrichtung zum Schärfen von Werkstücken in Form von Bearbeitungswerkzeugen mit Schneiden. An einer Werkstückträgeranordnung ist ein Werkstück in einer Spindel eingespannt, wobei die Werkstückträgeranordnung linear entlang einer ersten Achse verfahrbar ist. An einer Bearbeitungseinheit sind mehrere Schleifwerkzeuge angeordnet, die zum Schärfen des Werkstücks ausgewählt werden können.

DE 198 44 242 A1 offenbart eine Universalschleifmaschine zum Schleifen von Werkzeugen mit einem Werkzeugmagazin für Bearbeitungswerkzeuge, das mehrere Schleifwerkzeuge aufweist, die wahlweise zum Schleifen eines Werkzeugs zugeführt werden können.

Auch DE 201 04 030 U1 offenbart eine Vorrichtung zum Schärfen von Werkzeugen mit einem Werkzeugmagazin für Bearbeitungswerkzeuge.

CH 692 450 A5 offenbart eine Schleifmaschine, die eine Werkstückführungsvorrichtung umfasst, die ein zu schleifendes Werkstück während eines Schleifvorgangs am Schleifort stützt. Durch die Werkstückführungsvorrichtung ist es möglich, besonders lange und dünne zu schleifende Werkstücke während der Bearbeitung zu lagern.

DE 10 2011 000 335 A1 offenbart eine Werkzeugmaschine, die ein Werkstück und ein Werkzeug jeweils auf einer Schwinge anordnet, deren Schwenkachsen zueinander parallel angeordnet sind.

Eine weitere Schleifmaschine zum Bearbeiten eines Werkstücks ist in DE 42 42 906 A1 offenbart.

Wie bereits erläutert, ist es mit den aus dem Stand der Technik bekannten Vorrichtungen möglich, Bearbeitungswerkzeuge zu schärfen. Seitens der Industrie besteht in diesem Zusammenhang ein Bestreben, das Schärfen von Bearbeitungswerkzeugen möglichst effizient darzustellen, um schließlich einen möglichst wirtschaftlichen Bearbeitungsprozess zu erreichen. Dies ist gerade dann vorteilhaft, wenn hohe Stückzahlen von zu schleifenden Bearbeitungswerkzeugen bearbeitet werden sollen.

Es ist daher Aufgabe der vorliegenden Erfindung, eine Vorrichtung zum Bearbeiten von gleichartigen Werkstücken bereitzustellen, die eine hohe Werkstückausbringung ermöglicht. Ferner ist es Aufgabe der vorliegenden Erfindung, ein Verfahren zum Bearbeiten von gleichartigen Werkstücken bereitzustellen.

Die erfindungsgemäße Aufgabe wird durch eine Vorrichtung zum Bearbeiten von gleichartigen Werkstücken in einer Bearbeitungsposition, insbesondere zum Schärfen von Werkstücken mit Schneiden für die spanabhebende Bearbeitung, wie beispielsweise Bohrer, Fräser oder dergleichen nach Patentanspruch 1 gelöst. Ferner wird die erfindungsgemäße Aufgabe durch ein Verfahren zum Bearbeiten von gleichartigen Werkstücken in einer Bearbeitungsposition, insbesondere zum Schärfen von Werkstücken mit Schneiden für die spanabhebende Bearbeitung, wie beispielsweise Bohrer, Fräser oder dergleichen, nach Patentanspruch 24 gelöst. Vorteilhafte Weiterbildungen der Erfindung sind in den abhängigen Patentansprüchen beschrieben.

Die oben genannte Aufgabe wird gemäß Anspruch 1 durch eine Vorrichtung zum Bearbeiten von gleichartigen Werkstücken in einer Bearbeitungsposition, insbesondere zum Schärfen von Werkstücken mit Schneiden für die spanabhebende Bearbeitung, wie beispielsweise Bohrer, Fräser oder dergleichen gelöst. Dabei weist jedes Werkstück eine Werkstückachse und einen bezüglich der Werkstückachse vordefinierten Referenzpunkt auf. Ferner umfasst die Vorrichtung eine Werkstückträgeranordnung mit einer Mehrzahl von Werkstückträgern, wobei jeder Werkstückträger dazu ausgebildet ist, jeweils eines der gleichartigen Werkstücke aufzunehmen. Ferner weist jeder Werkstückträger jeweils eine Werkstückträgerachse auf. Darüber hinaus ist jedes Werkstück im zugeordneten Werkstückträger derart aufnehmbar, dass die Werkstückträgerachse und die Werkstückachse im Wesentlichen zusammenfallen. Die Werkstückträgerachsen der Mehrzahl von Werkstückträgern sind in vorbestimmter Ausrichtung zueinander angeordnet. Darüber hinaus umfasst die Vorrichtung eine Werkzeugträgeranordnung mit einer Mehrzahl von Werkzeugträgern, wobei jeder Werkzeugträger dazu ausgebildet ist, ein Bearbeitungswerkzeug aufzunehmen. Ferner weisen die Werkzeugträger jeweils eine Werkzeugträgerachse auf. Die Werkzeugträgerachsen sind dabei in vorbestimmter Ausrichtung zueinander angeordnet. Ferner ist die Vorrichtung dazu ausgebildet ist, beim Aufnehmen der Werkstücke in den zugeordneten Werkstückträgern der Werkstückträgeranordnung die Referenzpunkte der Werkstücke relativ zueinander bezüglich der Werkstückträgerachsen im Wesentlichen einheitlich auszurichten.

In vorteilhafter Weise wird durch die erfindungsgemäße Vorrichtung ein einfacher Aufbau zum Bearbeiten von gleichartigen Werkstücken erreicht. Ferner ist es möglich, dass mehrere Werkstücke durch Bearbeitungswerkzeuge auf der erfindungsgemäßen Vorrichtung bearbeitet werden können. Damit kann die Werkstückausbringung pro Zeiteinheit erhöht werden. In diesem Zusammenhang kann durch die erfindungsgemäße Vorrichtung auch die Wirtschaftlichkeit des Bearbeitens von Werkstücken verbessert werden.

Des Weiteren liegt ein Vorteil der erfindungsgemäßen Vorrichtung darin, dass der Mehraufwand für die weiteren Werkstückträger bzw. die weiteren Werkzeugträger vergleichsweise gering ausfällt, wenn gleichzeitig die Werkstückausbringung pro Zeiteinheit erhöht wird.

Insbesondere durch das einheitliche Ausrichten der Referenzpunkte der Werkstücke relativ zueinander wird ermöglicht, dass die Positionen der Werkstücke für das Bearbeiten durch die Bearbeitungswerkzeuge leicht erfasst werden können. In anderen Worten sind die Position bzw. die Positionen der Werkstücke dadurch vereinfacht angeordnet. Ferner ist es möglich, dass auch das Steuern der Vorrichtung vereinfacht wird. So kann trotz dem Bearbeiten mehrerer Werkstücke die Anzahl benötigter, unterschiedlicher Steuersignale gering gehalten werden.

Ferner wird durch die erfindungsgemäße Vorrichtung erreicht, dass die Fertigungsgenauigkeit hoch ist. In diesem Zusammenhang kann in vorteilhafter Weise eine hohe Reproduzierbarkeit der Werkstückqualität gewährleistet werden. Somit sind Werkstücke maßgenau, die auf der Vorrichtung bearbeitet wurden, und gleichen sich im Wesentlichen.

Darüber hinaus können in vorteilhafter Weise die Standzeiten der Vorrichtung reduziert werden. Zu bearbeitende Werkstücke und/oder benötigte Bearbeitungswerkzeuge können gleichzeitig gewechselt werden. Dies kann automatisiert durch entsprechende Auswechselvorrichtungen oder manuell durch menschliche Hilfe geschehen. Dabei ist es möglich, dass mehrere Auswechselvorrichtungen bzw. mehrere Personen gleichzeitig das Auswechseln vornehmen.

Ferner bleibt die durch die erfindungsgemäße Vorrichtung überstellte Fläche in einem Betrieb bzw. in einer Fertigungsstätte klein. Die Flächennutzung, also die Werkstückausbringung bezogen auf die überstellte Fläche, kann gesteigert werden, da die erfindungsgemäße Vorrichtung ferner wie erläutert im Stande ist, die Werkstückausbringung zu steigern.

Ferner kann erfindungsgemäß vorgesehen sein, dass das Bearbeiten der in der Mehrzahl von Werkstückträgern aufgenommenen Werkstücke über die Mehrzahl von Bearbeitungswerkzeugen parallel und/oder synchron erfolgt.

Im Fall eines parallelen Bearbeitens, bei dem in der Mehrzahl von Werkstückträgern Werkstücke aufgenommen sind, können durch die Mehrzahl von Bearbeitungswerkzeugen die Werkstücke zur gleichen Zeit in der Vorrichtung bearbeitet werden. Die Art des Bearbeitens kann dabei im Gegensatz zum synchronen Bearbeiten unterschiedlich sein. Folglich können Bearbeitungswerkzeuge unterschiedlich sein.

Durch das parallele Bearbeiten der Werkstücke ist es möglich, die Werkstückausbringung zu erhöhen. In anderen Worten kann die Anzahl der bearbeiteten Werkstücke während einer Zeiteinheit erhöht werden.

Werden die Werkstücke synchron bearbeitet, so erfolgt das Bearbeiten der Werkstücke zur gleichen Zeit und unter Anwendung gleichen Bearbeitens. Die Art der Bearbeitungswerkzeuge ist dabei ebenfalls gleich. Folglich werden gleichzeitig gleiche Bearbeitungsvorgänge an der Mehrzahl der Werkstücke vorgenommen. Ein synchrones Bearbeiten umfasst eine gleiche Bewegung der Bearbeitungswerkzeuge relativ zu den Werkstücken, eine gleiche Drehzahl der Bearbeitungswerkzeuge und gleichartige Bearbeitungswerkzeuge.

Durch das synchrone Bearbeiten der Werkstücke ist es möglich, dass die Werkstückausbringung erhöht wird. So kann die Anzahl der bearbeiteten Werkstücke während einer Zeiteinheit erhöht werden. Werden beispielsweise zwei Werkstücke von zwei Bearbeitungswerkzeugen bearbeitet, kann die Werkstückausbringung im Wesentlichen verdoppelt werden. Ferner kann dadurch erreicht werden, dass die Anzahl unterschiedlicher Steuersignale zum Steuern der Vorrichtung reduziert werden kann. Dies kann die Kosten einer derartigen Vorrichtung reduzieren.

Ferner kann durch das synchrone Bearbeiten der Werkstücke eine hohe Reproduzierbarkeit der Werkstückqualität erreicht werden. Werden Werkstücke synchron bearbeitet, so sind deren Maße im Wesentlichen gleich.

Darüber hinaus kann erfindungsgemäß vorgesehen sein, dass die Werkstückträgerachsen der Mehrzahl von Werkstückträgern der Werkstückträgeranordnung zueinander parallel ausgerichtet sind. Dadurch ist die relative Position der Werkstückachsen vereinheitlicht. So ist die Anordnung der Werkstückträger mit den Werkstücken vereinfacht.

In einer Weiterbildung der Erfindung kann vorgesehen sein, dass die Werkzeugträgerachsen der Mehrzahl von Werkzeugträgern der Werkzeugträgeranordnung zueinander parallel ausgerichtet sind. Dadurch ist die relative Position der jeweiligen Werkzeugträgerachsen vereinheitlicht. So ist die Anordnung der Werkzeugträger mit den Bearbeitungswerkzeugen in der Vorrichtung vereinfacht.

Ferner kann gemäß einer Ausgestaltung der Erfindung vorgesehen sein, dass die einzelnen Referenzpunkte der in der Mehrzahl von Werkstückträgern aufgenommenen Werkstücke in der Bearbeitungsposition auf einer gemeinsamen Geraden liegen, im Folgenden erste Gerade genannt, die im Wesentlichen senkrecht zu den Werkstückträgerachsen verläuft. So ist die Position der Referenzpunkte sowie die Position der Werkstücke zueinander vereinheitlicht und in vorbestimmter Weise festgelegt.

Gemäß einem Aspekt kann vorgesehen sein, dass die Bearbeitungswerkzeuge jeweils Werkzeugreferenzpunkte aufweisen, die in der Bearbeitungsposition im Wesentlichen auf einer zweiten gemeinsamen Geraden liegen, die senkrecht zu den Werkzeugträgerachsen angeordnet ist. So sind die Position der Werkzeugreferenzpunkte sowie die Position der Bearbeitungswerkzeuge zueinander vereinheitlicht und in vorbestimmter Weise festgelegt. Dadurch kann ein vereinfachtes Steuern der Bearbeitungswerkzeuge erreicht werden. Bevorzugt sind die Werkzeugreferenzpunkte in Bezug auf die jeweilige Werkzeugachse axial außenliegende Werkzeugreferenzpunkte. Axial außenliegende Werkzeugreferenzpunkte, beispielsweise an der Stirnseite des jeweiligen Werkzeugs, können einfach zu erfassen sein. Ferner kann ein Werkzeugreferenzpunkt mit einem Bearbeitungspunkt des Bearbeitungswerkzeugs zusammenfallen. Da alle Werkzeugreferenzpunkte auf der genannten zweiten gemeinsamen Geraden liegen, wird erreicht, dass in der Folge während der Werkstückbearbeitung alle aktuellen Bearbeitungspunkte der Bearbeitungswerkzeuge auf einer Geraden liegen. Dies kann ebenfalls ein vereinfachtes Steuern der Bearbeitungswerkzeuge ermöglichen.

Ferner kann erfindungsgemäß vorgesehen sein, dass die erste Gerade parallel zur zweiten Geraden in der Bearbeitungsposition angeordnet ist. Somit wird erreicht, dass die jeweiligen Bearbeitungswerkzeuge gegenüber den jeweiligen Werkstücken die jeweils gleiche räumliche Beziehung zueinander aufweisen. So kann jeweils der Abstand der Bearbeitungswerkzeuge gegenüber den Werkstücken gleich sein. Dies kann ein vereinfachtes Steuern der Bewegung der Bearbeitungswerkzeuge gegenüber den Werkstücken ermöglichen. Darüber hinaus kann dadurch eine platzsparende Anordnung der Werkstückträgeranordnung gegenüber der Werkzeugträgeranordnung ermöglicht werden.

Ferner kann dadurch erreicht werden, dass die Abtragsbedingungen an den Bearbeitungswerkzeugen und an den Werkstücken während des Bearbeitens nahezu identisch sind. Bezogen auf die Werkstücke werden somit im Wesentlichen gleich bearbeitete Werkstücke erzeugt, die geometrisch in Bezug auf die bearbeiteten Flächen vollständig oder zumindest weitestgehend gleich sind. Bezogen auf die Bearbeitungswerkzeuge wird dadurch an diesen auch ein näherungsweise gleicher Verschleiß hervorgerufen. Somit ist die Lebensdauer der Bearbeitungswerkzeuge im Wesentlichen gleich, sodass in etwa gleiche Standzeiten erreicht werden. Weiterhin kann erreicht werden, dass die Werkstücklängen der bearbeiteten Werkstücke im Wesentlichen nicht voneinander abweichen.

Je nach Anwendungsfall kann erfindungsgemäß vorgesehen sein, dass wenigstens ein Bearbeitungswerkzeug eine rotatorisch antreibbare Schleifscheibe, ein Erodierwerkzeug, vorzugsweise eine rotatorisch antreibbare Erodierscheibe, oder ein Laserkopf ist.

Eine Weiterbildung der Erfindung sieht vor, dass die Vorrichtung wenigstens eine Referenzfläche umfasst, nach Maßgabe derer die Werkstücke mit ihren jeweiligen Referenzpunkten ausrichtbar sind, insbesondere bezüglich der jeweiligen Werkstückträgerachsen. Die wenigstens eine Referenzfläche kann dabei als Fläche angesehen werden, die relativ zu der Vorrichtung genau eingemessen ist. Dies erleichtert das Ausrichten der Werkstücke. Ferner wird ein reproduzierbares Ausrichten der Werkstücke ermöglicht.

Darüber hinaus kann vorgesehen sein, dass die wenigstens eine Referenzfläche an der Werkzeugträgeranordnung oder an einem Werkstückgreifer oder an einem anderen Teil der Vorrichtung wie einem Maschinenbett angeordnet ist. Dies erleichtert das Ausrichten der Werkstücke. Vorteilhafterweise ist die wenigstens eine Referenzfläche dabei derart angeordnet, dass sie ausgehend von der Werkstückträgeranordnung mit der Mehrzahl von Werkstückträgern mit den zugehörigen Werkstücken einfach zugänglich ist.

Eine Weiterbildung sieht vor, dass die Referenzfläche fest oder beweglich an der Werkzeugträgeranordnung, dem Werkstückgreifer oder an dem anderen Teil der Vorrichtung wie dem Maschinenbett angebracht ist. Die feste Referenzfläche ermöglicht ein einmaliges Einmessen der Referenzfläche ohne weitere Überwachung. Die bewegliche Anbringung der Referenzfläche führt zu einer erhöhten Flexibilität der Verwendung der Referenzfläche.
Gemäß einem weiteren Aspekt der Erfindung kann vorgesehen sein, dass die Vorrichtung wenigstens eine multidirektionale Messvorrichtung umfasst, die dazu ausgebildet ist, die axiale Position des Referenzpunkts der Werkstücke zu erfassen, wobei das jeweilige Werkstück oder wenigstens eines der Werkstücke nach Maßgabe der erfassten axialen Position des Referenzpunkts des Werkstücks ausrichtbar ist. Ist beispielsweise eine Ausgangsposition eines Werkstücks erfasst, ist es möglich, dass auf Basis der erfassten Ausgangsposition die Position dieses Werkstücks in der Folge verändert wird, um es relativ zu anderen bereits erfassten Werkstücken auszurichten. Gleichzeitig ist es in der Folge auch möglich, auf Basis der erfassten Ausgangsposition die Position mindestens eines Werkstücks auszurichten, das bereits zuvor von der multidirektionalen Messvorrichtung erfasst wurde und ein anderes als das erfasste Werkstück ist, um die Werkstücke relativ zueinander auszurichten. Dadurch wird ein flexibles Ausrichten der Werkstücke ermöglicht. Ferner ist es durch Verwendung der multidirektionalen Messvorrichtung möglich, dass die Position eines Werkstücks als digitales Messsignal von der multifunktionalen Messvorrichtung ausgegeben wird. Das Signal kann dann zu verschiedenen Zwecken durch die Vorrichtung oder außerhalb der Vorrichtung genutzt werden. Darüber hinaus ist eine Überprüfung der erfassten axialen Position zur Qualitätssicherung möglich.

Eine Weiterbildung der Erfindung sieht vor, dass wenigstens einer der Werkstückträger linear in Richtung seiner Werkstückträgerachse verfahrbar ist. Dies ermöglicht ein hohes Maß an Flexibilität. Ferner kann die lineare Verfahrbarkeit des Werkstückträgers in Richtung seiner Werkstückträgerachse dazu dienen, den Referenzpunkt des aufgenommenen Werkstücks auszurichten. Darüber hinaus kann die lineare Verfahrbarkeit des Werkstückträgers dazu genutzt werden, das Werkstück während eines Bearbeitungsvorgangs auszurichten.

Gemäß einer Weiterbildung der Erfindung kann auch vorgesehen sein, dass die Vorrichtung ferner wenigstens eine Werkstückträgerlinearführung umfasst, die den wenigstens einen Werkstückträger linear verfahrbar lagert. Damit ist ein genaues Ausrichten eines Werkstücks möglich, das in dem Werkstückträger aufgenommen ist, möglich. Ferner kann der Werkstückträger lineare Positionen anfahren, die für einen aktuellen Bearbeitungsschritt oder für die Beladung des Werkstückträgers mit einem Werkstück vorteilhaft sind.

Ferner kann vorgesehen sein, dass die Werkstücke in den Werkstückträgern zum Ausrichten der Referenzpunkte der Werkstücke entlang der jeweiligen Werkstückträgerachse in unterschiedlichen axialen Positionen anordenbar sind. So ist gewährleistet, dass auch Werkstücke unterschiedlicher Längen in dem Werkstückträger angeordnet werden können und gleichzeitig deren Referenzpunkte ausgerichtet werden können.

Eine Weiterbildung der Erfindung sieht vor, dass die Vorrichtung ferner wenigstens einen Werkstückgreifer umfasst, der dazu eingerichtet ist, ein in einen Werkstückträger einzusetzendes Werkstück zu greifen und zu bewegen, um es beispielsweise axial auszurichten. So ist es möglich, dass ein einzusetzendes Werkstück durch den Greifer bereits in gewünschter Soll-Lage axial ausgerichtet in den Werkstückträger eingespannt wird. Ein weiteres Ausrichten der bereits eingesetzten Werkstücke kann dadurch vermieden werden.

Darüber hinaus kann vorgesehen sein, dass der Werkstückgreifer dazu eingerichtet ist, ein in den Werkstückträger einzusetzendes Werkstück an einer vorbestimmten Position des Werkstücks zu greifen und in Richtung der Werkstückträgerachse jeweils mit gleich positionierten Referenzpunkten in den Werkstückträger für die Bearbeitungsposition einzusetzen. So ist es möglich, dass ein Erfordernis für ein weiteres Ausrichten der bereits eingesetzten Werkstücke vermieden wird. Ferner kann die Zeitdauer reduziert werden, die für das Beladen und das Ausrichten der Werkstücke notwendig ist.

Gemäß einem Aspekt kann vorgesehen sein, dass die Werkzeugträgeranordnung relativ zu der Werkstückträgeranordnung um eine Schwenkachse verschwenkbar ist. Somit kann die Anzahl der relativen Positionen zwischen den Werkstücken und den Bearbeitungswerkzeugen vergrößert werden, sodass eine Vielzahl an Positionen zum Bearbeiten der Werkstücke und damit eine variable Bearbeitung ermöglicht wird. Darüber hinaus kann mittels einer Verschwenkbewegung die Position aller Werkstücke relativ zu den Bearbeitungswerkzeugen verändert werden.

Gemäß einer Weiterbildung kann vorgesehen sein, dass die Schwenkachse orthogonal zu mindestens einer der Werkstückträgerachsen und/oder orthogonal zu mindestens einer der Werkzeugträgerachsen angeordnet ist. Erfolgt folglich ein Verschwenken um die Schwenkachse, so kann die Position aller Werkstücke relativ zu den Bearbeitungswerkzeugen gleich verändert werden. Die Schwenkachse kann ferner parallel zu der ersten und/oder zweiten Geraden angeordnet sein. So erfolgt bei einem Verschwenken um die Schwenkachse ein gleichartiges Verändern der Referenzpunkte der Werkstücke relativ zu den Bearbeitungswerkzeugen.

Ferner kann vorgesehen sein, dass die Werkzeugträgeranordnung und/oder die Werkstückträgeranordnung eine Schwinge umfasst, die um die Schwenkachse verschwenkbar ist. So ist es möglich, dass die Werkstückträgeranordnung fest mit der Vorrichtung verbunden ist, während die Werkzeugträgeranordnung eine Schwinge umfasst und auf der Vorrichtung um die Schwenkachse verschwenkbbar ist. Eine Ausgestaltung, in der die Werkstückträgeranordnung eine Schwinge umfasst und die Werkzeugträgeranordnung an der Vorrichtung fest angeordnet ist, ist ebenso möglich. Ferner ist es möglich, dass jeweils die Werkstückträgeranordnung und die Werkzeugträgeranordnung eine Schwinge umfassen. In diesem Zusammenhang ist es möglich, dass die Vorrichtung zwei Schenkachsen aufweist.

Gemäß einer weiteren Ausführungsform der Erfindung kann vorgesehen sein, dass die Werkstückträger Werkstückspindeln umfassen, die jeweils eine rotierende Bewegung der Werkstücke um die jeweilige Werkstückträgerachse ermöglichen. Dadurch kann die Flexibilität während dem Bearbeiten der Werkstücke erhöht werden.

Ferner ist es möglich, dass die Werkstücke durch Drehen um die Werkstückträgerachse in ihrer Drehposition ausgerichtet werden. So ist es möglich, dass die Werkstücke in ihrer Drehposition bezüglich der Werkstückträgeranordnung einheitlich orientiert werden. Dies kann vorteilhaft sein, wenn beispielsweise Werkstücke in die Werkstückträger eingesetzt werden, die entlang ihres Umfangs eine variierende Form aufweisen. Dies kann beispielsweise bei Werkstücken der Fall sein, die Schneiden aufweisen und in der Vorrichtung geschärft oder nachgeschärft werden. Sind alle Werkstücke bezüglich ihrer Drehposition in den Werkstückträger einheitlich ausgerichtet, so erleichtert dies das parallele bzw. synchrone Bearbeiten der Werkstücke.

Gemäß einer Ausgestaltung der Erfindung kann eine Rotationsmessvorrichtung vorgesehen sein, die Drehpositionen der Werkstücke erfassen kann. Die Rotationsmessvorrichtung kann eine optische Messeinrichtung sein. Die von der Rotationsmessvorrichtung bereitgestellte Information kann herangezogen werden, um die Werkstücke in ihrer Drehposition einheitlich auszurichten. Ferner kann die Rotationsmessvorrichtung dazu eingerichtet sein, die Referenzpunkte der Werkstücke zu erfassen. Das Erfassen und Ausrichten kann insbesondere dann vorteilhaft sein, wenn die Werkstücke in ihrer Umfangsrichtung nicht homogen aufgebaut sind. Ein Grund dafür können beispielsweise Kühlkanäle sein, die in die Werkstücke bzw. in Werkstückrohlinge eingebracht sind. Durch das rotatorische Ausrichten der Werkstücke kann erreicht werden, dass die Kühlkanäle in dem bearbeiteten Werkstück die richtige Position aufweisen. Ferner wird vermieden, dass während dem Bearbeiten der Werkstücke ein Kühlkanal ungewollt durchtrennt oder verletzt wird.

Gemäß einer Ausführungsform umfasst die Vorrichtung ferner eine erste Verschleißmessvorrichtung, die dazu ausgebildet ist, die Geometrie des ersten Bearbeitungswerkzeugs zu erfassen, und eine zweite Verschleißmessvorrichtung, die dazu ausgebildet ist, die Geometrie des zweiten Bearbeitungswerkzeugs zu erfassen. Durch die Verschleißmessvorrichtungen kann das Ausmaß des Verschleißes der Bearbeitungswerkzeuge erfasst werden. Dies kann der Qualitätssicherung und auch zum Ausgleichen des Verschleißes dienen.

Ferner kann die erfindungsgemäße Vorrichtung eine Abrichtvorrichtung umfassen, die dazu ausgebildet ist, die Bearbeitungswerkzeuge insbesondere zum Ausgleich von unterschiedlichem Verschleiß der Bearbeitungswerkzeuge abzurichten. So kann gewährleistet werden, dass die Bearbeitungswerkzeuge eine gewünschte Maßgenauigkeit einhalten, die eine gewünschte gleichmäßige Qualität der bearbeiteten Werkstücke ermöglicht.

Die Abrichtvorrichtung kann ferner eine Abrichtscheibe umfassen, die durch eine Abrichtspindel drehangetrieben ist. So kann das Ausmaß des Abtragens gezielt beeinflusst werden.

Das Abrichten der jeweiligen Bearbeitungswerkzeuge erfolgt bevorzugt getrennt voneinander.

Gemäß einer Ausführungsform weist ferner wenigstens einer von Werkstückträger oder Werkzeugträger eine Ausgleichsvorrichtung zum Ausgleich von Verschleiß auf. So kann unterschiedlicher Verschleiß an den Bearbeitungswerkzeugen kompensiert werden.

Gemäß einer vorteilhaften Ausgestaltung ist die Ausgleichsvorrichtung am Werkstückträger angeordnet und umfasst eine Positioniereinrichtung, insbesondere mit zwei Positioniereinheiten, die dazu ausgebildet ist, die erste Werkstückträgerachse oder die zweite Werkstückträgerachse auszurichten, insbesondere zum Ausgleich von unterschiedlichem Verschleiß der Bearbeitungswerkzeuge und/oder zum Ausgleich von Toleranzen, die sich aus der Fertigung oder Montage der erfindungsgemäßen Vorrichtung ergeben können. So kann vorteilhafter Weise unterschiedlicher Verschleiß an den Bearbeitungswerkzeugen ausgeglichen werden, ohne dass die Bearbeitungswerkzeuge abgerichtet werden müssen oder es kann auch die Notwendigkeit eines Abrichtens hinausgezögert werden.

Gemäß einer Ausgestaltung der erfindungsgemäßen Vorrichtung erfolgt das Ausrichten durch lineares Verschieben des ersten oder zweiten Werkstücks linear in Richtung mindestens einer der Führungsachsen und/oder durch Erzeugen eines Winkels zwischen der ersten Werkstückträgerachse und mindestens einer der Führungsachsen.Die erfindungsgemäße Vorrichtung kann ferner dazu eingerichtet sein, dass die bearbeiteten Werkstücke und/oder die Bearbeitungswerkzeuge, insbesondere die durch das jeweilige Bearbeitungswerkzeug bearbeitete Stelle des Werkstücks, von einem Spülmedium umströmt wird. Das Spülmedium sorgt für ein Abtransportieren abgetragenen Materials. Ferner bewirkt das Spülmedium einen Kühleffekt an Werkstück und Werkzeug. Dadurch kann die Bearbeitungsqualität an den Werkstücken erhöht und der Verschleiß an den Bearbeitungswerkzeugen verringert werden. Ferner kann vorgesehen sein, dass der Umfang des Umspülens mit dem Spülmedium an dem ersten und zweiten Werkstück und/oder ersten und zweiten Bearbeitungswerkzeug im Wesentlichen gleich erfolgt. So kann gewährleistet werden, dass an den Werkstücken jeweils gleiche Bedingungen vorliegen. Eine im Wesentlichen gleiche Bearbeitungsqualität der Werkstücke und ein im Wesentlichen gleicher Verschleiß an den Bearbeitungswerkzeugen kann somit erreicht werden.

Ferner wird die Eingangs bezeichnete der Erfindung zugrunde liegende Aufgabe durch ein Verfahren zum Bearbeiten von gleichartigen Werkstücken in einer Bearbeitungsposition, insbesondere zum Schärfen von Werkstücken mit Schneiden für die spanabhebende Bearbeitung, wie beispielsweise Bohrer, Fräser oder dergleichen gelöst. Dabei wird das Verfahren vorzugsweise mit einer Vorrichtung der vorstehend beschriebenen Art durchgeführt. Ferner weist jedes Werkstück eine Werkstückachse und einen bezüglich der Werkstückachse vordefinierten Referenzpunkt auf. Darüber hinaus umfasst die Vorrichtung eine Werkstückträgeranordnung mit einer Mehrzahl von Werkstückträgern, wobei jeder Werkstückträger dazu ausgebildet ist, jeweils eines der gleichartigen Werkstücke aufzunehmen. Ferner weist jeder Werkstückträger jeweils eine Werkstückträgerachse auf. Darüber hinaus ist jedes Werkstück im zugeordneten Werkstückträger derart aufnehmbar, dass die Werkstückträgerachse und die Werkstückachse im Wesentlichen zusammenfallen. Die Werkstückträgerachsen der Mehrzahl von Werkstückträgern sind in vorbestimmter Ausrichtung zueinander angeordnet. Darüber hinaus umfasst die Vorrichtung eine Werkzeugträgeranordnung mit einer Mehrzahl von Werkzeugträgern, wobei jeder Werkzeugträger dazu ausgebildet ist, ein Bearbeitungswerkzeug aufzunehmen. Ferner weisen die Werkzeugträger jeweils eine Werkzeugträgerachse auf. Die Werkzeugträgerachsen sind dabei in vorbestimmter Ausrichtung zueinander angeordnet. Ferner werden gemäß dem Verfahren beim Aufnehmen der Werkstücke in den zugeordneten Werkstückträgern der Werkstückträgeranordnung die Referenzpunkte der Werkstücke relativ zueinander bezüglich der Werkstückträgerachsen im Wesentlichen einheitlich ausgerichtet.

In vorteilhafter Weise wird durch das erfindungsgemäße Verfahren ein einfaches Bearbeiten gleichartiger Werkstücke erreicht. Ferner ist es möglich, dass mehrere Werkstücke durch Bearbeitungswerkzeuge auf der erfindungsgemäßen Vorrichtung bearbeitet werden können. Damit kann die Werkstückausbringung pro Zeiteinheit erhöht werden. In diesem Zusammenhang kann durch die erfindungsgemäße Vorrichtung auch die Wirtschaftlichkeit des Bearbeitens von Werkstücken verbessert werden.

Des Weiteren liegt ein Vorteil des erfindungsgemäßen Verfahrens darin, dass der Mehraufwand für die weiteren Werkstückträger bzw. die weiteren Werkzeugträger vergleichsweise gering ausfällt, wenn gleichzeitig die Werkstückausbringung pro Zeiteinheit erhöht wird. Ferner kann trotz dem Bearbeiten mehrere Werkstücke die Anzahl unterschiedlicher Steuersignale gering gehalten werden.

Insbesondere durch das einheitliche Ausrichten der Referenzpunkte der Werkstücke relativ zueinander wird ermöglicht, dass die Positionen der Werkstücke für das Bearbeiten durch die Bearbeitungswerkzeuge leicht erfasst werden können. In anderen Worten sind die Position bzw. die Positionen der Werkstücke dadurch vereinfacht angeordnet.

Ferner wird durch das erfindungsgemäße Verfahren erreicht, dass die Fertigungsgenauigkeit gesteigert wird. In diesem Zusammenhang kann in vorteilhafter Weise eine hohe Reproduzierbarkeit gewährleistet werden. Somit sind Werkstücke maßgenau, die auf der Vorrichtung bearbeitet wurden, und gleichen sich im Wesentlichen.

Darüber hinaus können in vorteilhafter Weise die Standzeiten durch das Erfindungsgemäße Verfahren reduziert werden. Zu bearbeitende Werkstücke und/oder benötigte Bearbeitungswerkzeuge können gleichzeitig gewechselt werden. Dies kann automatisiert durch entsprechende Auswechselvorrichtungen oder manuell durch menschliche Hilfe geschehen. Dabei ist es möglich, dass mehrere Auswechselvorrichtungen gleichzeitig das Auswechseln vornehmen.

Eine Weiterbildung des erfindungsgemäßen Verfahrens sieht vor, dass die in den Werkstückträger aufgenommenen Werkstücke von den in dem Werkzeugträger aufgenommenen Bearbeitungswerkzeugen parallel und/oder synchron bearbeitet werden. Dadurch kann eine erhöhte Werkstückausbringung während einer Zeiteinheit erreicht und die Effizienz eines derartigen Verfahrens kann gesteigert werden.

Gemäß einem Aspekt des erfindungsgemäßen Verfahrens kann vorgesehen sein, dass die einzelnen Referenzpunkte der in der Mehrzahl von Werkstückträgern aufgenommenen Werkstücke in der Bearbeitungsposition auf einer gemeinsamen Geraden liegen, im Folgenden erste Gerade genannt, die im Wesentlichen senkrecht zu den Werkstückträgerachsen verläuft. So kann die Position der Referenzpunkte sowie die Position der Werkstücke zueinander vereinheitlicht und in vorbestimmter Weise festgelegt werden.

Weiterhin kann gemäß einer Ausgestaltung des erfindungsgemäßen Verfahrens vorgesehen sein, dass die Bearbeitungswerkzeuge Werkzeugreferenzpunkte aufweisen, die für die Bearbeitungsposition entlang einer zweiten gemeinsamen Geraden ausgerichtet werden, die senkrecht zu den Werkzeugträgerachsen angeordnet ist. So kann die Position der Werkzeugreferenzpunkte sowie die Position der Bearbeitungswerkzeuge zueinander vereinheitlicht und in vorbestimmter Weise festgelegt werden. Dies kann das Steuern der Bearbeitungswerkzeuge vereinfachen. Bevorzugt sind die Werkzeugreferenzpunkte in Bezug auf die jeweilige Werkzeugachse axial außenliegende Werkzeugreferenzpunkte. Axial außenliegende Werkzeugreferenzpunkte, beispielsweise an der Stirnseite des jeweiligen Werkzeugs, können einfach zu erfassen sein. Ferner kann ein Werkzeugreferenzpunkt mit einem Bearbeitungspunkt des Bearbeitungswerkzeugs zusammenfallen. Da alle Werkzeugreferenzpunkte auf der genannten zweiten gemeinsamen Geraden liegen, wird erreicht, dass in der Folge während der Werkstückbearbeitung alle aktuellen Bearbeitungspunkte der Bearbeitungswerkzeuge auf einer Geraden liegen. Dies kann ebenfalls ein vereinfachtes Steuern der Bearbeitungswerkzeuge ermöglichen.

Darüber hinaus kann gemäß einer Weiterbildung des erfindungsgemäßen Verfahrens vorgesehen sein, dass die Vorrichtung wenigstens eine Referenzfläche umfasst, nach Maßgabe derer die Werkstücke mit ihren jeweiligen Referenzpunkten ausgerichtet werden, insbesondere bezüglich der jeweiligen Werkstückträgerachsen. Die wenigstens eine Referenzfläche kann dabei eine Fläche sein, die relativ zu der Vorrichtung genau eingemessen ist. Dies erleichtert das Ausrichten der Werkstücke. Ferner wird ein reproduzierbares Ausrichten der Werkstücke ermöglicht.

Ferner kann gemäß einer Ausgestaltung vorgesehen sein, dass die Werkstücke für die Bearbeitungsposition axial ausgerichtet sind, wenn der Referenzpunkt gegenüber der zugehörigen Referenzfläche in Richtung der Werkstückträgerachse gleich beabstandet ist. Ferner können die Referenzpunkte jeweils axial außenliegende Werkstückendpunkte sein, die in der Bearbeitungsposition in Richtung weg von dem Werkstückträger orientiert sind.

Gemäß einer Ausführungsform des erfindungsgemäßen Verfahrens kann ferner vorgesehen sein, dass die Vorrichtung wenigstens eine multidirektionale Messvorrichtung umfasst, die die axiale Position des Referenzpunkts wenigstens eines Werkstücks erfasst, wobei das jeweilige Werkstück oder wenigstens eines der Werkstücke nach Maßgabe der erfassten axialen Position des Referenzpunkts des Werkstücks ausgerichtet wird. Ist beispielsweise eine Ausgangsposition eines Werkstücks erfasst, ist es in der Folge möglich, dass auf Basis der erfassten Ausgangsposition die Position dieses Werkstücks in der Folge verändert wird, um es relativ zu anderen bereits erfassten Werkstücken auszurichten. Gleichzeitig ist es in der Folge auch möglich, auf Basis der erfassten Ausgangsposition die Position mindestens eines Werkstücks auszurichten, das bereits zuvor von der multidirektionalen Messvorrichtung erfasst wurde und ein anderes als das erfasste Werkstück ist, um die Werkstücke relativ zueinander auszurichten. Dadurch wird ein flexibles Ausrichten der Werkstücke ermöglicht. Ferner ist es durch Verwendung der multidirektionalen Messvorrichtung möglich, dass die Position eines Werkstücks als digitales Messsignal durch die multidirektionale Messvorrichtung ausgegeben wird. Das Signal kann zu verschiedenen Zwecken durch die Vorrichtung oder außerhalb der Vorrichtung genutzt werden. Darüber hinaus ist eine Überprüfungen der erfassten axialen Position zur Qualitätssicherung möglich.

Weiter kann bei dem erfindungsgemäßen Verfahren vorgesehen sein, dass der jeweilige Werkstückträger des Werkstücks oder wenigstens einer der Werkstückträger nach Maßgabe der erfassten axialen Position des Referenzpunkts des Werkstücks linear entlang seiner Werkstückträgerachse verfahren wird. Dies ermöglicht ein hohes Maß an Flexibilität. Darüber hinaus kann die lineare Verfahrbarkeit des Werkstückträgers dazu genutzt werden, das Werkstück während eines Bearbeitungsvorgangs auszurichten.

Gemäß einem Aspekt des erfindungsgemäßen Verfahrens kann vorgesehen sein, dass die Werkstücke in den Werkstückträgern zum Ausrichten der Referenzpunkte der Werkstücke entlang der jeweiligen Werkstückträgerachse in unterschiedlichen axialen Positionen anordenbar sind. So ist gewährleistet, dass auch Werkstücke unterschiedlicher Längen in dem Werkstückträger angeordnet werden können und gleichzeitig deren Referenzpunkte ausgerichtet werden können.

Eine Weiterbildung des Verfahrens sieht vor, dass ferner wenigstens ein Werkstückgreifer vorgesehen ist, der ein in einen Werkstückträger einzusetzendes Werkstück greift und bewegt, um es beispielsweise für die Bearbeitungsposition axial auszurichrichten. So ist es möglich, dass ein einzusetzendes Werkstück durch den Greifer bereits in gewünschter Soll-Lage axial ausgerichtet in den Werkstückträger eingesetzt wird. Ein weiteres axiales Ausrichten der bereits eingesetzten Werkstücke kann dadurch vermieden werden.

Gemäß einer Ausgestaltung des Verfahrens kann vorgesehen sein, dass der Werkstückgreifer ein in den Werkstückträger einzusetzendes Werkstück an einer vorbestimmten Position des Werkstücks greift und in Richtung der Werkstückträgerachse mit gleich positioniertem Referenzpunkt in den Werkstückträger für die Bearbeitungsposition einsetzt. So ist es möglich, dass ein Erfordernis für ein weiteres Ausrichten der bereits eingesetzten Werkstücke vermieden wird. Ferner kann die Zeitdauer reduziert werden, die für das Beladen und das Ausrichten der Werkstücke notwendig ist.

Dem Fachmann ist klar, dass Merkmale, Eigenschaften und Vorteile der Erfindung, die im Zusammenhang mit der erfindungsgemäßen Vorrichtung erläutert wurden, auch für das erfindungsgemäße Verfahren gelten. Auch die Umkehrung davon ist dem Fachmann klar.

Die Erfindung wird im Folgenden beispielhaft anhand der beiliegenden Figuren erläutert. Es stellen dar:
- Fig. 1: eine schematische schräge Vorderansicht einer erfindungsgemäßen Vorrichtung;
- Fig. 2: eine schematische Detailansicht der Vorderansicht einer erfindungsgemäßen Vorrichtung;
- Fig. 3: eine schematische Detailansicht einer erfindungsgemäßen Vorrichtung mit einer Referenzfläche an einem Werkstückgreifer;
- Fig. 4: eine schematische Detailansicht einer erfindungsgemäßen alternativen Vorrichtung mit einer Referenzfläche an einer Werkzeugträgeranordnung;
- Fig. 5: eine schematische Detailansicht einer erfindungsgemäßen alternativen Vorrichtung mit einer multidirektionalen Messvorrichtung und einer Ausgestaltung mit jeweils axial verfahrbaren Werkstückträgern;
- Fig. 6: eine schematische Detailansicht einer erfindungsgemäßen Vorrichtung mit einer Verschleißkontrolle an einem ersten Bearbeitungswerkzeug;
- Fig. 7: eine schematische Detailansicht einer erfindungsgemäßen Vorrichtung mit einer Verschleißkontrolle an einem zweiten Bearbeitungswerkzeug;
- Fig. 8: eine schematische Detailansicht einer erfindungsgemäßen Vorrichtung mit einer Verschleißkontrolle an beiden Bearbeitungswerkzeugen;
- Fig. 9: eine schematische Detailansicht einer erfindungsgemäßen Vorrichtung mit einer Abrichtvorrichtung; und
- Fig. 10: eine schematische Detailansicht einer erfindungsgemäßen Vorrichtung mit Positioniereinheiten;

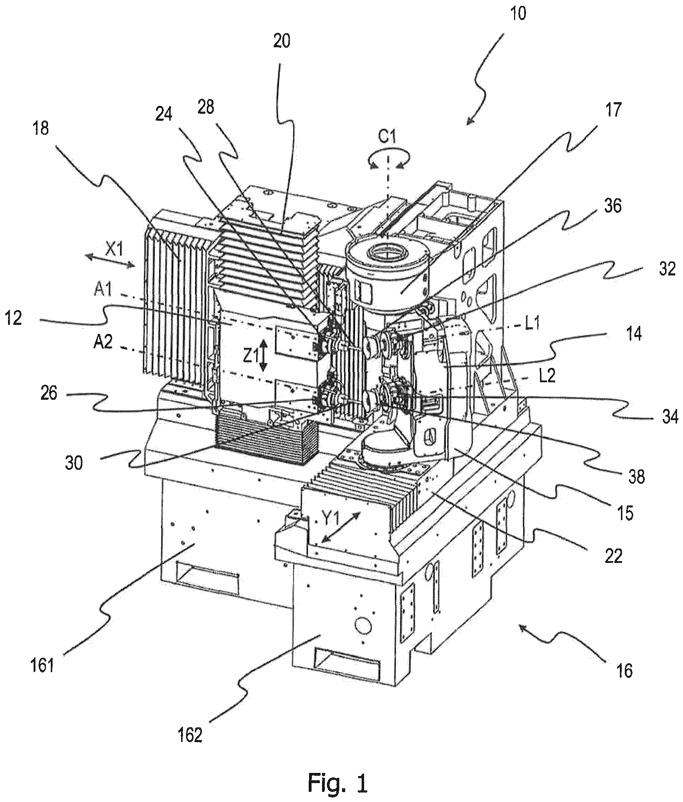

Figur 1 zeigt eine schematische schräge Vorderansicht einer erfindungsgemäßen Vorrichtung 10. Die Vorrichtung 10 umfasst eine Werkstückträgeranordnung 12 und eine Werkzeugträgeranordnung 14, die an einem T-förmigen Maschinengestell 16 angeordnet sind. Die Werkstückträgeranordnung 12 ist dabei im Wesentlichen auf einem ersten Schenkel 161 des T-förmigen Maschinengestells angeordnet. Die Werkzeugträgeranordnung 14 ist ferner im Wesentlichen auf einem zweiten Schenkel 162 des T-förmigen Maschinengestells angeordnet.

Die Werkstückträgeranordnung 12 ist auf einer ersten Linearführung 18 angeordnet. Die erste Linearführung 18 ermöglicht ein lineares Verlagern der Werkstückträgeranordnung 12 in Richtung einer ersten Führungsachse X1. Ferner ist die Werkstückträgeranordnung 12 auf einer zweiten Linearführung 20 angeordnet. Die zweite Linearführung 20 ermöglicht ein lineares Verlagern der Werkstückträgeranordnung 12 in Richtung einer zweiten Führungsachse Z1.

Die Werkzeugträgeranordnung 14 ist auf einer dritten Linearführung 22 angeordnet. Die dritte Linearführung 22 ermöglicht ein lineares Verlagern der Werkzeugträgeranordnung 14 in Richtung einer dritten Führungsachse Y1. Ferner ist die Werkstückträgeranordnung 14 als U-förmige Schwinge 15 ausgeführt, die um eine Schwenkachse C1 drehbar gegenüber einem gabelartigen Rahmen 17 gelagert ist. Die erste, zweite und dritte Führungsachse sind jeweils zueinander senkrecht orientiert.

Die Werkstückträgeranordnung 12 ist in Form eines Schlittens mit zwei daran angebrachten Werkstückträgern 24, 26 ausgebildet. Jeder der beiden Werkstückträger 24, 26 weist ein gleichartiges Werkstück 28, 30 auf. Das erste Werkstück 28 ist in dem ersten Werkstückträger 24 lösbar eingespannt. Das zweite Werkstück 30 ist in dem zweiten Werkstückträger 26 lösbar eingespannt. Die Werkstücke 28, 30 weisen jeweils eine Werkstückachse auf. Der erste Werkstückträger weist eine erste Werkstückträgerachse A1 auf. Der zweite Werkstückträger weist eine zweite Werkstückträgerachse A2 auf. Die Werkstückachse des ersten Werkstücks 28 ist kongruent zu der ersten Werkstückträgerachse A1. Die Werkstückachse des zweiten Werkstücks 30 ist kongruent zu der zweiten Werkstückträgerachse A2. Die Werkstückträgerachsen A1, A2 sind parallel zueinander angeordnet. Die Werkstücke 28, 30 sind um die jeweilige Werkstückträgerachse A1, A2 drehbar gelagert. Dazu ist in den Werkstückträgern 24, 26 jeweils eine antreibbare Werkstückspindel vorgesehen, die nicht näher dargestellt ist.

Die Werkzeugträgeranordnung 14 ist mit zwei Werkzeugträgern 32, 34 ausgebildet. Jeder der beiden Werkzeugträger 32, 34 weist ein Bearbeitungswerkzeug 36, 38 auf. Das erste Bearbeitungswerkzeug 36 ist in dem ersten Werkzeugträger 32 lösbar eingespannt. Das zweite Bearbeitungswerkzeug 38 ist in dem zweiten Werkzeugträger 34 lösbar eingespannt. Die Bearbeitungswerkzeuge 36, 38 weisen eine Werkzeugachse auf. Der erste Werkzeugträger 32 weist eine erste Werkzeugträgerachse L1 auf. Der zweite Werkzeugträger 34 weist eine zweite Werkzeugträgerachse L2 auf. Die Werkzeugachse des ersten Bearbeitungswerkzeugs 36 ist kongruent zu der ersten Werkzeugträgerachse L1. Die Werkzeugachse des zweiten Bearbeitungswerkzeugs 38 ist kongruent zu der zweiten Werkzeugträgerachse L2. Die beiden Werkzeugträgerachsen L1, L2 sind parallel zueinander angeordnet. Die Bearbeitungswerkzeuge 36, 38 sind um die jeweilige Werkzeugträgerachse L1, L2 drehbar gelagert. Dazu ist in den Werkzeugträgern 32, 34 jeweils eine antreibbare Werkzeugspindel vorgesehen. Beide Werkzeugträger 32, 34 sind gemeinsam mit der Schwinge 15 um die Schwenkachse S1 verschwenkbar.

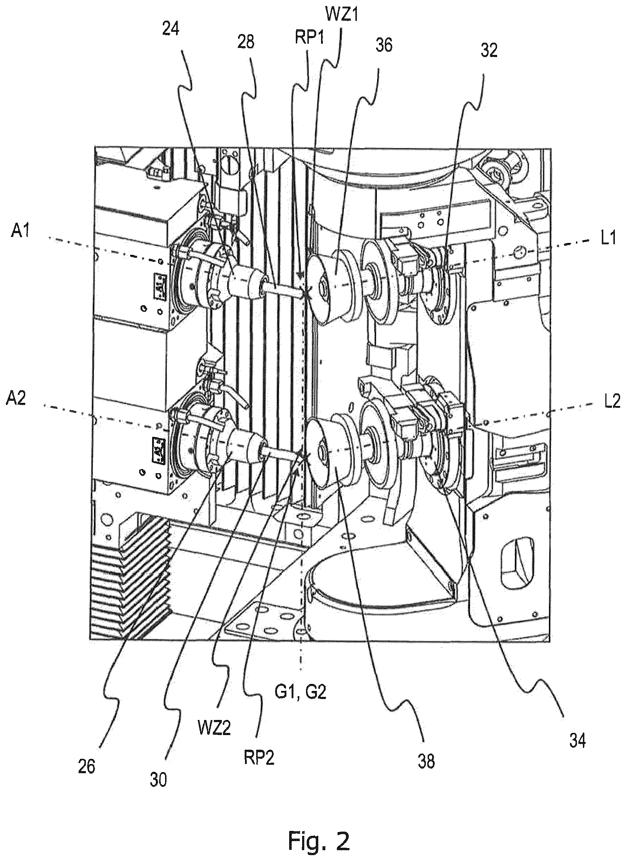

Figur 2 zeigt eine schematische Detailansicht der Vorderansicht einer erfindungsgemäßen Vorrichtung 10. Das erste Werkstück 28 umfasst einen ersten Referenzpunkt RP1. Das zweite Werkstück 30 umfasst einen zweiten Referenzpunkt RP2. Die beiden Referenzpunkte RP1, RP2 sind jeweils axial außenliegende Punkte der Werkstücke 28, 30 und sind in Richtung weg von dem jeweiligen Werkstückträger 24, 26 orientiert. Die Referenzpunkte RP1, RP2 liegen im Wesentlichen auf einer ersten Geraden G1. Die erste Gerade G1 ist senkrecht zu den Werkstückträgerachsen A1, A2 angeordnet.

Das erste Bearbeitungswerkzeug 36 umfasst einen ersten Werkzeugreferenzpunkt WZ1. Das zweite Bearbeitungswerkzeug 38 umfasst einen zweiten Werkzeugreferenzpunkt WZ2. Die beiden Werkzeugreferenzpunkte WZ1, WZ2 sind jeweils axial außenliegende Punkte der Bearbeitungswerkzeuge 36, 38. Die Werkzeugreferenzpunkte WZ1, WZ2 liegen auf einer zweiten Geraden G2. Die zweite Gerade G2 ist senkrecht zu den Werkzeugträgerachsen L1, L2 angeordnet.

In der gezeigten Darstellung gemäß Figur 2 befinden sich die Werkstücke 28, 30 und die beiden Bearbeitungswerkzeuge 36, 38 in der Bearbeitungsposition. In der Bearbeitungsposition ist die erste Gerade G1 parallel zu der zweiten Geraden G2 angeordnet. In der gezeigten Darstellung gemäß Figur 2 fallen die erste und die zweite Gerade G1, G2 zusammen. Dies ist jedoch nicht zwingend notwendig. Ändert sich die Position der Werkstücke 28, 30 relativ gegenüber den Bearbeitungswerkzeugen 36, 38, beispielsweise um eine andere Position mit den Bearbeitungswerkzeugen 36, 38 zu bearbeiten, so bleiben die beiden Geraden G1, G2 zwar parallel zueinander angeordnet, fallen jedoch nicht mehr zusammen.

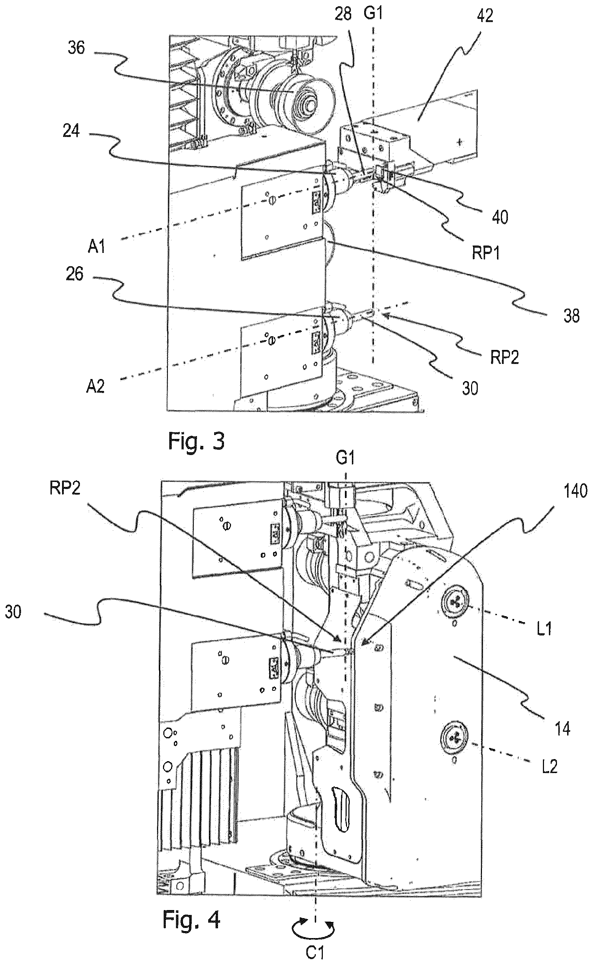

Figur 3 zeigt eine schematische Detailansicht einer erfindungsgemäßen Vorrichtung 10 mit einer Referenzfläche 40 an einem Werkstückgreifer 42. Die Referenzfläche 40 ist an dem Werkstückgreifer 42 an einer vorderen Seite angeordnet, die in Richtung der Werkstücke 28, 30 ausgerichtet ist, die in den jeweiligen Werkstückträgern 24, 26 angeordnet sind. In der gezeigten Darstellung gemäß Figur 3 ist die Referenzfläche 40 senkrecht zu den beiden Werkstückachsen A1, A2 angeordnet. Die Referenzfläche 40 ist aus einem harten Material geformt, das seine Form im Wesentlichen beibehält. Die beiden Bearbeitungswerkzeuge 36, 38 sind gegenüber den Werkstücken 28, 30 verschwenkt und verfahren, sodass der Werkstückgreifer 42 mit der Referenzfläche 40 freien Zugang zu den Werkstücken 28, 30 hat.

Figur 4 zeigt eine schematische Detailansicht einer erfindungsgemäßen alternativen Ausgestaltung der Vorrichtung 10 mit einer Referenzfläche 140 an der Werkzeugträgeranordnung 14. Die Referenzfläche 140 ist an einer Außenseite der Werkzeugträgeranordnung 14 angebracht. In der gezeigten Darstellung gemäß Figur 4 ist die Referenzfläche 140 an einer Außenseite der Werkzeugträgeranordnung 14 angeordnet, die verschwenkt um die Schwenkachse C1 und in der gezeigten Darstellung im Wesentlichen senkrecht zu den Werkzeugträgerachsen L1, L2 ausgerichtet ist. So ist die Referenzfläche 140 für die Werkstücke 28, 30 frei zugänglich. Die Referenzfläche 140 erstreckt sich entlang der Außenseite der Werkzeugträgeranordnung 14 derart, dass ein Werkstück 28, 30 ausgerichtet werden kann. Es ist jedoch auch eine Ausgestaltung mit einer größeren oder mehreren Referenzflächen 140 möglich, die derart ausfällt, dass mehrere oder alle Werkstücke 28, 30 gleichzeitig ausgerichtet werden können.

Die Referenzfläche 40, 140 ist gemäß Figuren 3 und 4 exponiert angeordnet, sodass sie für die Werkstücke 28, 30 einfach zugänglich ist.

Das Ausrichten mit Hilfe der Referenzfläche 40, 140 gemäß Figuren 3 und 4 wird im Folgenden in Bezug auf das erste Werkstück 28 beschrieben. Zunächst wird das erste Werkstück 28 in dem ersten Werkstückträger 24 angeordnet. Eine nicht gezeigte Spannvorrichtung des Werkstückträgers 24 ist dabei in einer geöffneten Position. Um ein Herausfallen des ersten Werkstücks 28 zu verhindern, kann das erste Werkstück 28 leicht durch die Spannvorrichtung festgehalten werden. Dazu nimmt die Spannvorrichtung eine Position ein, die gegenüber einer vollständig geöffneten Position lediglich verringert geöffnet ist. Die Spannvorrichtung muss allerdings so weit geöffnet sein, dass ein axiales Verschieben des ersten Werkstücks 28 möglich ist. In einem weiteren Schritt wird nun der erste Werkstückträger 24 mit dem ersten Werkstück 28 relativ gegen die Referenzfläche 40, 140 bewegt, bis der Referenzpunkts RP1 des ersten Werkstücks 28 auf der Geraden G1 liegt und damit gegenüber dem ersten Bearbeitungswerkzeug 36 die vorbestimmte Position einnimmt. Wie aus der Erläuterung klar wird, darf das erste Werkstück 28 beim ersten Schritt des Anordnens in dem ersten Werkstückträger 24 nicht derart weit in den Werkstückträger hineingesetzt werden, dass es beim Ausrichten die Referenzfläche 40, 140 nicht mehr berühren kann. Ist ein Ausrichten durch die Referenzfläche 40, 140 notwendig, so wird beim Ausrichten das erste Werkstück 28 in den ersten Werkstückträger 24 hineingeschoben. Die relative Bewegung gegen die Referenzfläche 40, 140 kann erreicht werden, indem die Werkstückträgeranordnung 12 linear entlang der ersten Führungsachse X1 verschoben wird. Ist die vorgegebene Position des Referenzpunkts RP1 erreicht, kann die Spannvorrichtung des Werkzeugträgers 24 geschlossen werden, sodass das Werkstück 28 fest in dem Werkzeugträger 24 eingespannt ist.

Analog kann der Ablauf des Ausrichtens für das zweite Werkstück 30 bzw. für die Mehrzahl der Werkstücke 28, 30 wiederholt werden, bis alle Werkstücke 28, 30 ausgerichtet sind und deren Referenzpunkte RP1, RP2 auf der Geraden G1 liegen.

Ebenso ist es möglich, dass im Falle einer ausreichend großen Referenzfläche 40, 140 oder im Falle mehrerer aufeinander abgestimmter Referenzflächen mehrere oder alle Werkstücke 28, 30 gleichzeitig ausgerichtet werden können. Dazu werden die im Zusammenhang mit dem ersten Werkstück 28 erläuterten Schritte parallel für mehrere oder alle Werkstücke 28, 30 ausgeführt.

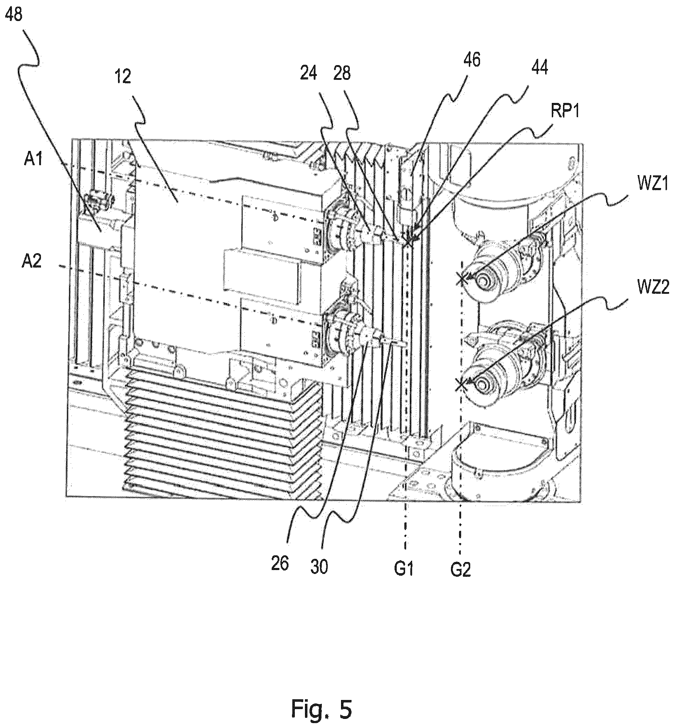

Figur 5 zeigt eine schematische Detailansicht einer erfindungsgemäßen alternativen Vorrichtung 10 mit einer multidirektionalen Messvorrichtung 44 und einer Ausgestaltung mit einem axial verfahrbaren oberen Werkstückträger 24. Die multidirektionale Messvorrichtung 44 ist an der Vorrichtung 10 derart angeordnet, dass sie freien Zugang zu den Werkstücken 28, 30 hat. Dazu kann die multidirektionale Messvorrichtung 44 auf einer Seite der Werkzeugträgeranordnung 14 fest angebracht sein. Ferner kann die multidirektionale Messvorrichtung 44 aber auch wie in Figur 5 gezeigt an einem separaten Arm 46 an dem Maschinengestell 16 der Vorrichtung 10 angebracht sein. Die Position der multidirektionalen Messvorrichtung 44 ist relativ zu dem Maschinengestell 16 festgelegt. Alternativ kann der Arm 46 der multidirektionalen Messvorrichtung 44 relativ zum Maschinengestell 16 bewegbar ausgestaltet sein. In diesem Fall kann eine Positionsveränderung der multidirektionalen Messvorrichtung 44 erfasst werden. Gemäß der Ausgestaltung wie in Figur 5 gezeigt, ist der obere Werkstückträger 24 linear in Richtung dessen Werkstückträgerachse A1 verfahrbar. Das Verfahren des oberen Werkstückträgers 24 erfolgt unabhängig von dem unteren Werkstückträger 26. Dies wird erreicht, indem der obere Werkstückträger 24 eine Werkstückträgerlinearführung 48 aufweist, die den oberen Werkstückträger 24 linear entlang der ersten Werkstückträgerachse A1 verfahrbar lagert. Alternativ ist es auch möglich, dass nur oder auch der zweite Werkstückträger 26 eine Werkstückträgerlinearführung umfasst.
Das Ausrichten mit Hilfe der multidirektionalen Messvorrichtung 44 wird im Folgenden in Bezug auf das erste Werkstück 28 beschrieben. Zunächst wird das erste Werkstück 28 in dem ersten Werkstückträger 24 angeordnet. Eine nicht gezeigte Spannvorrichtung des ersten Werkstückträgers 24 ist dabei in einer geöffneten Position. Sobald das erste Werkstück 28 eine gewünschte Position in dem ersten Werkstückträger 24 erreicht, die ein festes Einspannen des ersten Werkstücks 28 ermöglicht, wird das erste Werkstück 28 durch die Spannvorrichtung in dem Werkstückträger 24 fest eingespannt. Darauf folgend wird das erste Werkstück 28 mit dem ersten Werkstückträger 28 relativ zu der multidirektionalen Messvorrichtung 44 bewegt. Dies erfolgt, indem die Werkstückträgeranordnung 12 linear entlang der ersten Führungsachse X1 bewegt wird. Die multidirektionale Messvorrichtung 44 erfasst die Position des ersten Referenzpunkts RP1. Im Fall einer berührungssensitiven multidirektionalen Messvorrichtung 44 wird die Position des ersten Referenzpunkts RP1 erfasst, sobald dieser die multidirektionalen Messvorrichtung 44 berührt. Die multidirektionale Messvorrichtung 44 kann allerdings auch eine optische Messeinrichtung sein, die die Position des ersten Werkstücks 28 bzw. des ersten Referenzpunkts RP1 erfasst. Ferner oder alternativ kann die multidirektionale Messvorrichtung 44 dazu dienen, die aktuelle Winkelposition des Werkstücks 28 zu erfassen. Ist die Position des ersten Referenzpunkts RP1 erfasst, so kann diese mit einem Sollwert verglichen werden. Der Sollwert entspricht der Position des ersten Referenzpunkts RP1 auf der Geraden G1. Abhängig von dem Sollwert und der erfassten Position kann nun die Position des ersten Referenzpunkts RP1 verändert werden, sodass diese mit dem Sollwert übereinstimmt. Dies wird erreicht, indem die erste Werkstückträgeranordnung 24 linear durch die Werkstückträgerlinearführung 48 verschoben wird, sodass der erste Referenzpunkt RP1 auf der Geraden G1 liegt.

Bei einer alternativen Herangehensweise ist es auch möglich, die Position des zweiten Referenzpunkts RP2 mit dem Messtaster 44 zu erfassen und darauf basierend die Position des ersten Werkstücks 28 zu verändern. Dabei kann auch die Position des ersten Referenzpunkts RP1 gemessen werden, wenn diese noch nicht bekannt ist. So kann ebenfalls erreicht werden, dass alle Referenzpunkte RP1, RP2 gleich ausgerichtet sind und auf der Geraden G1 liegen.

Bei der alternativen Ausgestaltung mit der Werkstückträgerlinearführung lediglich an der zweiten Werkstückträgeranordnung 26 erfolgt das Ausrichten der Referenzpunkte RP1, RP2 entsprechend analog. Ferner können an allen Werkstückträgeranordnungen 24, 26 Werkstückträgerlinearführungen angeordnet sein. Ziel ist es, dass alle Referenzpunkte RP1, RP2 am Ende des Ausrichtens auf der Geraden G1 liegen.

Eine weitere nicht näher dargestellte alternative Herangehensweise zum Ausrichten der Werkstücke 28, 30 in den Werkstückträgeranordnungen 24, 26 wird im Folgenden erläutert. Dazu wird der Werkstückgreifer 42 in Form eines Beladers verwendet, der zu beladende Werkstücke 28, 30 greifen, transportieren, ausrichten und in die Werkstückträgeranordnungen 24, 26 einsetzen kann. Das Ausrichten mit Hilfe des Beladers wird im Folgenden in Bezug auf das erste Werkstück 28 beschrieben. Üblicherweise werden zu beladende Werkstücke 28, 30 in einer Bereitstellungsvorrichtung bereitgestellt. Die Bereitstellungsvorrichtung kann eine Palette mit einer Mehrzahl an Bohrungen sein, wobei jeweils in den Bohrungen ein zu beladendes Werkstück 28, 30 angeordnet ist. Zunächst bewegt sich der Werkstückgreifer 42 in Richtung des zu beladenden ersten Werkstücks 28 und greift dieses. Das Greifen kann kraftschlüssig mit einer dafür vorgesehenen Greifvorrichtung erfolgen. Die Greifvorrichtung an dem Werkstückgreifer 42 greift das erste Werkstück 28 dabei an einer vorbestimmten Greifposition gegenüber dem ersten Referenzpunkt RP1. Diese vorbestimmte Greifposition kann ermittelt werden, indem die Geometrie bzw. Länge des ersten Werkstücks 28 erfasst wird. Alternativ kann das Werkstück auch zunächst gegriffen und anschließend die Geometrie bzw. Länge des Werkstücks erfasst werden. Dazu kann jeweils eine optische Messvorrichtung vorgesehen sein. Die optische Messvorrichtung kann an dem Werkstückgreifer 42 angeordnet sein. Alternativ kann die räumliche Position der Bereitstellungsvorrichtung bekannt sein, sodass die einzusetzenden Werkstücke 28, 30 an einer vorgegebenen Position angeordnet sind. Ist der erste Referenzpunkt RP1 ein vorderes Ende des ersten Werkstücks 28, so kann die vorbestimmte Greifposition ein vorbestimmter Abstand zu dem vorderen Ende des ersten Werkstücks 28 sein. In einem folgenden Schritt wird das erste Werkstück 28 derart in dem ersten Werkstückträger 24 durch den Werkstückgreifer 42 angeordnet, dass der erste Referenzpunkt RP1 auf der Geraden G1 liegt. Danach wird das erste Werkstück 28 in dem ersten Werkstückträger 24 fest eingespannt. Werden weitere Werkstücke 28, 30 eingesetzt und ausgerichtet, werden diese analog zu den Ausführungen zu dem ersten Werkstück 28 in der vorbestimmten Greifposition von dem Werkstückgreifer 42 gegriffen und in den jeweiligen Werkstückträger 24, 26 ausgerichtet eingesetzt.

Gemäß einer alternativen Ausgestaltung der Herangehensweise zum Ausrichten der Werkstücke 28, 30 mit dem Werkstückgreifer 42 in Form des Beladers greift der Werkstückgreifer 42 das erste Werkstück 28 zuerst ohne eine vorbestimmte Position zu berücksichtigen. Erst darauf folgend erfasst die Messvorrichtung den ersten Referenzpunkt RP1 und die aktuelle Greifposition. Weicht die aktuelle Greifposition von der vorbestimmten Greifposition ab, wird das erste Werkstück 28 entsprechend um diesen Differenzbetrag korrigiert in den ersten Werkstückträger 24 eingesetzt. Auf dem Differenzbetrag basierend wird das erste Werkstück 28 derart in dem ersten Werkstückträger 24 durch den Werkstückgreifer 42 angeordnet, dass der erste Referenzpunkt RP1 auf der Geraden G1 liegt. Danach wird das erste Werkstück 28 in dem ersten Werkstückträger 24 fest eingespannt. Analog kann das Ausrichten gemäß der Herangehensweisen mit dem Belader für das zweite Werkstück 30 bzw. für die Mehrzahl der Werkstücke 28, 30 wiederholt werden, bis alle Werkstücke 28, 30 ausgerichtet sind und deren Referenzpunkte RP1, RP2 auf der Geraden G1 liegen.

Das Ausrichten der Werkstücke 28, 30 entsprechend den genannten Vorgehensweisen kann automatisiert erfolgen. Dazu kann beispielsweise eine Steueranordnung vorgesehen sein, die die erläuterten Schritte ausführt.

Die Bearbeitungswerkzeuge 36, 38 werden durch einen festen Anschlag in dem jeweiligen Werkzeugträger 32, 34 in einer vorgegebenen Position fest eingespannt.

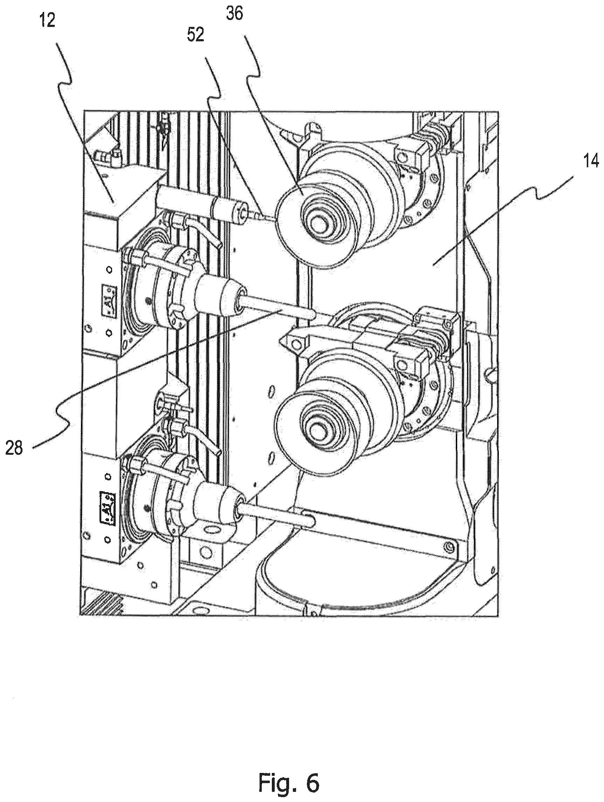

Figur 6 zeigt eine schematische Detailansicht einer erfindungsgemäßen Vorrichtung 10 mit einer Verschleißkontrolle an dem ersten Bearbeitungswerkzeug 36. Zur Verschleißkontrolle ist eine erste Verschleißmessvorrichtung 52 vorgesehen. Die erste Verschleißmessvorrichtung 52 ist dazu ausgebildet, die Geometrie des ersten Bearbeitungswerkzeugs 36 zu erfassen.

Die erste Verschleißmessvorrichtung 52 kann als Messtaster ausgebildet sein. Um eine Verschleißkontrolle an dem ersten Bearbeitungswerkzeug 36 vorzunehmen, wird der Messtaster zunächst in eine Arbeitsposition gebracht. Dazu kann ein Linearantrieb vorgesehen sein. In Figur 6 ist die Arbeitsposition eine Position, in der der Messtaster aus der Werkstückträgeranordnung 12 hervorsteht. Die Position des Messtasters 52 in der Arbeitsposition ist bekannt. Im Folgenden wird nun die Werkstückträgeranordnung 12 relativ zu der Werkzeugträgeranordnung 14 bewegt. Berührt ein Tastelement des Messtasters das erste Bearbeitungswerkzeug 36, so werden zu diesem Zeitpunkt die Positionen des Messtasters und der Maschinenachsen erfasst und anschließend ausgewertet. Ferner kann das erste Bearbeitungswerkzeug 36 um die erste Werkzeugträgerachse L1 gedreht werden und der Messtaster wiederkehrend relativ gegen das erste Bearbeitungswerkzeug 36 bewegt werden. So können mehrere Punkte auf dem ersten Bearbeitungswerkzeug 36 in ihrer Position oder der gesamte Umfang des ersten Bearbeitungswerkzeugs 36 erfasst werden. Aus der erfassten Position bzw. den erfassten Positionen kann die Geometrie des ersten Bearbeitungswerkzeugs 36 ermittelt werden. Das erste Werkstück 28 befindet sich während der Verschleißkontrolle nicht in Eingriff mit dem ersten Bearbeitungswerkzeug 36.

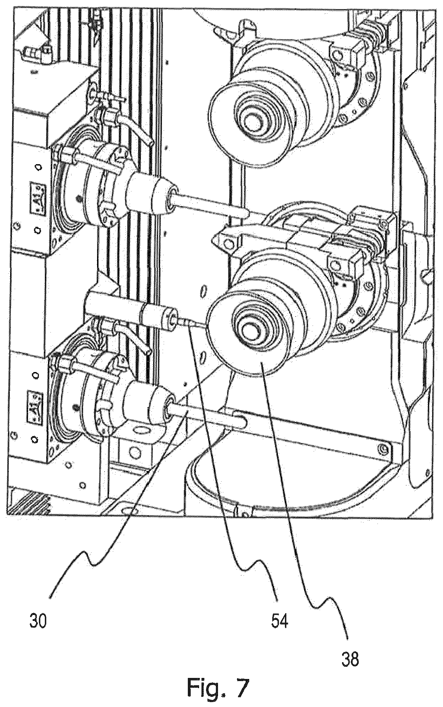

Figur 7 zeigt eine schematische Detailansicht einer erfindungsgemäßen Vorrichtung 10 mit einer Verschleißkontrolle an dem zweiten Bearbeitungswerkzeug 38. Zur Verschleißkontrolle ist eine zweite Verschleißmessvorrichtung 54 vorgesehen, die dazu ausgebildet ist, die Geometrie des zweiten Bearbeitungswerkzeugs 38 zu erfassen. Das Erfassen der Geometrie des zweiten Bearbeitungswerkzeugs 38 erfolgt dabei analog zu den Ausführungen zu dem ersten Bearbeitungswerkzeug 36. Das zweite Werkstück 30 befindet sich während der Verschleißkontrolle nicht in Eingriff mit dem zweiten Bearbeitungswerkzeug 38.

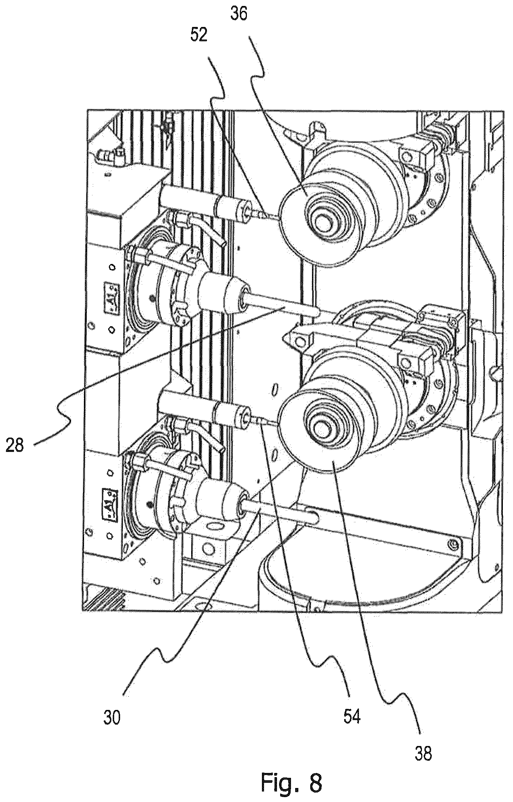

Figur 8 zeigt eine schematische Detailansicht einer erfindungsgemäßen Vorrichtung 10 mit einer Verschleißkontrolle an beiden Bearbeitungswerkzeugen 36, 38 durch die Verschleißmessvorrichtungen 52, 54. Befinden sich beide Verschleißmessvorrichtungen 52, 54 in ihrer Arbeitsposition, so können die Geometrie der jeweiligen Bearbeitungswerkzeuge 36, 38 parallel bzw. synchron ermittelt werden. Die Werkstücke 28, 30 befinden sich während der Verschleißkontrolle nicht in Eingriff mit den Bearbeitungswerkzeugen 36, 38.

Alternativ zu dem Messtaster können die Verschleißmessvorrichtungen 52, 54 auch als optische Verschleißmessvorrichtungen ausgebildet sein, um die Geometrie der Bearbeitungswerkzeuge 36, 38 zu erfassen.

Die Bearbeitungswerkzeuge 36, 38, deren Verschleiß erfasst wird, können Schleifscheiben sein.

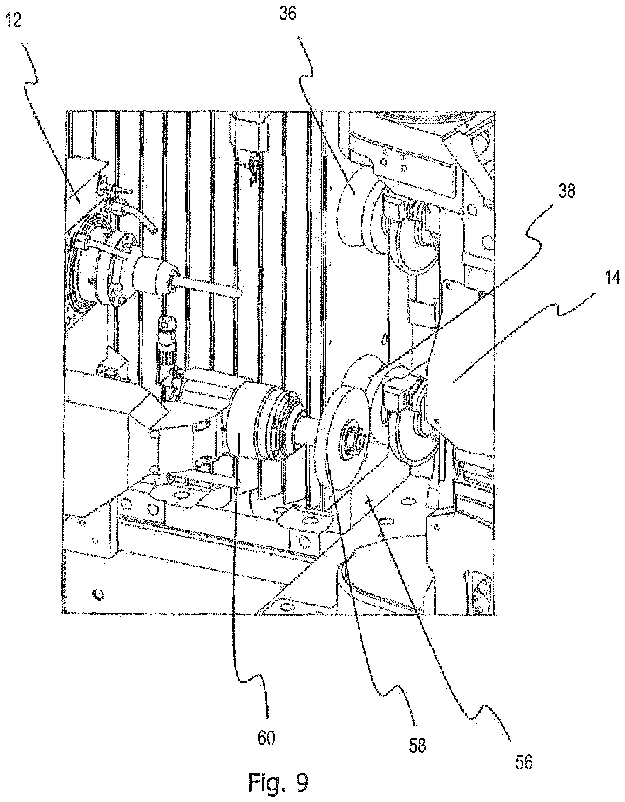

Figur 9 zeigt eine schematische Detailansicht einer erfindungsgemäßen Vorrichtung 10 mit einer Abrichtvorrichtung 56 mit einer Abrichtscheibe 58, die in einer Abrichtspindel 60 drehangetrieben eingespannt ist. Die Abrichtvorrichtung 56 ist an der Werkstückträgeranordnung 12 angebracht. Die Abrichtvorrichtung 56 wird in nicht weiter gezeigter Weise in die in Figur 9 gezeigte Arbeitsposition gebracht und nach einem Abrichtvorgang wieder aus dem Arbeitsraum in eine Parkposition entfernt.

In der in Figur 9 gezeigten Darstellung befindet sich die Abrichtscheibe 58 in Eingriff mit dem zweiten Bearbeitungswerkzeug 38, das als Schleifscheibe ausgebildet ist. Auf Basis der durch die zweite Verschleißmessvorrichtung 54 gewonnenen Daten zur Geometrie des zweiten Bearbeitungswerkzeugs 38 kann bestimmt werden, an welchen Positionen und in welchem Ausmaß ein Abtragen an dem zweiten Bearbeitungswerkzeug 38 notwendig ist. Zum Abrichten wird die Abrichtscheibe 58 durch die Abrichtspindel 60 rotatorisch relativ gegenüber dem zweiten Bearbeitungswerkzeug 38 bewegt. Die Abrichtvorrichtung 56 wird durch relative Bewegung der Werkstückträgeranordnung 12 gegenüber der Werkzeugträgeranordnung 14 und den Bearbeitungswerkzeugen 36, 38 je nach Bedarf positioniert. So werden unterschiedliche Positionen zum Abrichten des zweiten Bearbeitungswerkzeugs 38 angefahren.

Das Abrichten des ersten Bearbeitungswerkzeugs 36 erfolgt analog zum Abrichten des zweiten Bearbeitungswerkzeugs 38, jedoch auf Basis der Daten der Geometrie, die durch die erste Verschleißmessvorrichtung 52 gewonnen wurden.

Während dem Abrichten befinden sich die Bearbeitungswerkzeuge 36, 38 nicht in Eingriff mit den Werkstücken 24, 26. Ferner befinden sich die Verschleißmessvorrichtungen 52, 54 nicht in ihrer Arbeitsposition. Das Abrichten des zweiten Bearbeitungswerkzeugs 38 erfolgt unabhängig von dem Abrichten des ersten Bearbeitungswerkzeugs 36.

Eine Abrichtscheibe 58 ist in der Regel weicher als eine Schleifscheibe eines Bearbeitungswerkzeugs 36, 38. Daher weist eine Abrichtscheibe 58 in der Regel einen höheren, nicht oder nur unzureichend kalkulierbaren Verschleiß auf als eine Schleifscheibe. Daher wird eine Schleifscheibe iterativ abgerichtet. In anderen Worten wird das abzurichtende Bearbeitungswerkzeug 36, 38 zunächst durch die entsprechende Verschleißmessvorrichtung 52, 54 messtechnisch erfasst. Danach wird das Bearbeitungswerkzeug 36, 38 durch die Abrichtvorrichtung 56 mit der Abrichtscheibe 58 abgerichtet. Um ein zu starkes Abrichten zu vermeiden, findet das Abrichten nur in geringem Umfang statt. Anschließend wird das abzurichtende Bearbeitungswerkzeug 36, 38 erneut durch die entsprechende Verschleißmessvorrichtung 52, 54 messtechnisch erfasst und dann wieder durch die Abrichtscheibe 58 abgerichtet. Dieser Vorgang wird so lange wiederholt, bis das Bearbeitungswerkzeug 36, 38 die gewünschte Geometrie erreicht hat. Mit der Abrichtvorrichtung 56 wird nun für die jeweiligen Bearbeitungswerkzeuge 36, 38 erreicht, dass die Wirkflächen der Bearbeitungswerkzeuge 36, 38 die zur parallelen bzw. synchronen Bearbeitung geforderte Geometrie aufweisen.

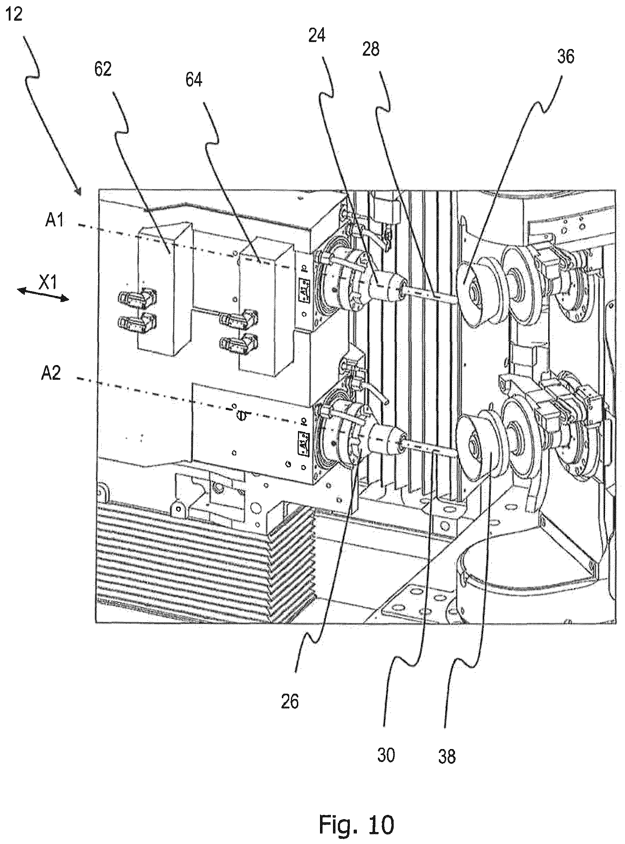

Figur 10 zeigt eine schematische Detailansicht einer erfindungsgemäßen Vorrichtung 10 mit einer Positioniereinrichtung mit Positioniereinheiten 62, 64. Die Positioniereinheiten 62, 64 sind an der Werkstückträgeranordnung 12 an dem ersten Werkstückträger 24 angebracht. Sie sind dazu ausgebildet, den ersten Werkstückträger 24 derart zu bewegen, dass das erste Werkstück 28 linear in Richtung mindestens einer der Führungsachsen (X1, Y1, Z1) verschoben wird und/oder ein Winkel zwischen der ersten Werkstückträgerachse und mindestens einer der Führungsachsen (X1, Y1, Z1) erzeugt wird. So kann es sein, dass das erste Werkstück 28 gezielt anders ausgerichtet ist als das zweite Werkstück 30.

Die Positioniereinheiten 62, 64 können dazu genutzt werden, um unterschiedlichen Verschließ an den Bearbeitungswerkzeugen 36, 38 auszugleichen. So kann ein Abrichten durch die Abrichtvorrichtung 56 verzögert oder vermieden werden. Um den ersten Werkstückträger 24 mit dem ersten Werkstück 28 zum Verschleißausgleich ausrichten zu können, werden zunächst die Geometrien der Bearbeitungswerkzeuge 36, 38 durch die jeweilige Verschleißmessvorrichtung 52, 54 erfasst, wie exemplarisch im Zusammenhang mit Figuren 6, 7 und 8 erläutert ist. Statt einem Abrichten wird nach dem Erfassen der Geometrien die Position des ersten Werkstückträgers 24 mit dem ersten Werkstück 28 durch die Positioniereinheiten 62, 64 ausgerichtet. Der zweite Werkstückträger 26 umfasst keine Positioniereinheiten. Das zweite Werkstück 30 wird nicht ausgerichtet. Um eine gleichmäßige Bearbeitung der Werkstücke 28, 30 trotz unterschiedlich verschlissener Bearbeitungswerkzeuge 36, 38 zu ermöglichen, wird also das erste Werkstück 28 in Abhängigkeit von dem zweiten Werkstück 30 und dem Verschleiß der Bearbeitungswerkzeuge 36, 38 durch die erfassten Geometrien ausgerichtet. In anderen Worten wird die erste Werkstückträgerachse A1 relativ gegenüber der zweiten Werkstückträgerachse A2 durch Ausrichten bewegt, sodass die Bewegung den unterschiedlichen Verschleiß an den Bearbeitungswerkzeugen 36, 38 ausgleicht.

Alternativ können die Positioniereinheiten 62, 64 auch an dem zweiten Werkstückträger 26 angebracht sein, um das zweite Werkstück 30 abhängig von dem ersten Werkstück 28 und dem Verschleiß der Bearbeitungswerkzeuge 36, 38 auszurichten. Durch die Vorrichtung 10 können mehrere Werkstücke 28, 30 parallel bzw. synchron bearbeitet werden. So kann die Werkstückausbringung pro Zeiteinheit erhöht werden. Ferner wird durch die Vorrichtung 10 erreicht, dass relative Bewegungen wie das Verschwenken um die Schwenkachse C1 nicht nur für ein Werkstück 28, sondern gleichzeitig auch für ein weiteres Werkstück 30 genutzt werden kann. So ist trotz dem Bearbeiten von mehreren Werkstücken 28, 30 lediglich eine Schwinge 15 notwendig. Ebenso ist für das Bearbeiten der mehreren Werkstücke 28, 30 die gleiche Anzahl an Linearführungen 18, 20, 22 notwendig, wie sie auch für das Bearbeiten eines einzelnen Werkstücks 28, 30 notwendig wäre. In diesem Zusammenhang kann durch die Vorrichtung 10 erreicht werden, dass die Wirtschaftlichkeit des Bearbeitens der Werkstücke 28, 30 verbessert wird. Ferner ist es durch die Erfindungsgemäße Vorrichtung 10 möglich, die Werkstücke 28, 30 gleich auszurichten. So kann bei den bearbeiteten Werkstücken 28, 30 eine hohe Maßgenauigkeit erreicht werden. Ferner sind synchron bearbeitete Werkstücke 28, 30 im Wesentlichen gleich. Insgesamt kann eine hohe Reproduzierbarkeit der Werkstückqualität erreicht werden. Darüber hinaus tragen sich durch das gleiche Ausrichten der Werkstücke 28, 30 die Bearbeitungswerkzeuge im Wesentlichen gleich ab. Standzeiten durch Bearbeitungswerkzeugwechsel können dadurch reduziert werden.

## Patentansprüche

1. Vorrichtung (10) zum Bearbeiten von gleichartigen Werkstücken (28, 30) in einer Bearbeitungsposition, insbesondere zum Schärfen von Werkstücken (28, 30) mit Schneiden für die spanabhebende Bearbeitung, wie beispielsweise Bohrer, Fräser oder dergleichen,
wobei jedes Werkstück (28, 30) eine Werkstückachse und einen bezüglich der Werkstückachse vordefinierten Referenzpunkt (RP1, RP2) aufweist,
wobei die Vorrichtung (10) umfasst:
eine Werkstückträgeranordnung (12) mit einer Mehrzahl von Werkstückträgern (24, 26), wobei jeder Werkstückträger (24, 26) dazu ausgebildet ist, jeweils eines der gleichartigen Werkstücke (28, 30) aufzunehmen, wobei jeder Werkstückträger (24, 26) jeweils eine Werkstückträgerachse (A1, A2) aufweist, wobei jedes Werkstück (28, 30) im zugeordneten Werkstückträger (24, 26) derart aufnehmbar ist, dass die Werkstückträgerachse (A1, A2) und die Werkstückachse im Wesentlichen zusammenfallen,
wobei die Werkstückträgerachsen (A1, A2) der Mehrzahl von Werkstückträgern (24, 26) in vorbestimmter Ausrichtung zueinander angeordnet sind, und
eine Werkzeugträgeranordnung (14) mit einer Mehrzahl von Werkzeugträgern (32, 34), wobei jeder Werkzeugträger (32, 34) dazu ausgebildet ist, ein Bearbeitungswerkzeug (36, 38) aufzunehmen, und wobei die Werkzeugträger (32, 34) jeweils eine Werkzeugträgerachse (L1, L2) aufweisen, und wobei die Werkzeugträgerachsen (L1, L2) in vorbestimmter Ausrichtung zueinander angeordnet sind,
wobei die Vorrichtung (10) dazu ausgebildet ist, beim Aufnehmen der Werkstücke (28, 30) in den zugeordneten Werkstückträgern (24, 26) der Werkstückträgeranordnung (12) die Referenzpunkte (RP1, RP2) der Werkstücke (28, 30) relativ zueinander bezüglich der Werkstückträgerachsen (A1, A2) im Wesentlichen einheitlich auszurichten.

2. Vorrichtung (10) nach Anspruch 1, wobei das Bearbeiten der in der Mehrzahl von Werkstückträgern (24, 26) aufgenommenen Werkstücke (28, 30) über die Mehrzahl von Bearbeitungswerkzeugen (36, 38) parallel und/oder synchron erfolgt.

3. Vorrichtung (10) nach Anspruch 1 oder 2, wobei die Werkstückträgerachsen (A1, A2) der Mehrzahl von Werkstückträgern (24, 26) der Werkstückträgeranordnung (12) oder/und der Werkzeugträgeranordnung (14)zueinander parallel ausgerichtet sind.

4. Vorrichtung (10) nach einem der vorangehenden Ansprüche, wobei die einzelnen Referenzpunkte (RP1, RP2) der in der Mehrzahl von Werkstückträgern (24, 26) aufgenommenen Werkstücke (28, 30) in der Bearbeitungsposition im Wesentlichen auf einer ersten gemeinsamen Geraden (G1) liegen, die senkrecht zu den Werkstückträgerachsen (A1, A2) angeordnet ist.

5. Vorrichtung (10) nach einem der vorangehenden Ansprüche, wobei die Bearbeitungswerkzeuge (36, 38) jeweils Werkzeugreferenzpunkte (WZ1, WZ2) aufweisen, die in der Bearbeitungsposition im Wesentlichen auf einer zweiten gemeinsamen Geraden (G2) liegen, die senkrecht zu den Werkzeugträgerachsen (L1, L2) angeordnet ist, wobei insbesondere die erste Gerade (G1) parallel zur zweiten Geraden (G2) in der Bearbeitungsposition angeordnet ist.

6. Vorrichtung (10) nach einem der vorangehenden Ansprüche, wobei die Vorrichtung (10) wenigstens eine Referenzfläche (40, 140) umfasst, nach Maßgabe derer die Werkstücke (28, 30) mit ihren jeweiligen Referenzpunkten (RP1, RP2) ausrichtbar sind, insbesondere bezüglich der jeweiligen Werkstückträgerachsen (A1, A2), wobei vorzugsweise die wenigstens eine Referenzfläche (40, 140) an der Werkzeugträgeranordnung (14) oder an einem Werkstückgreifer (42) oder an einem anderen Teil der Vorrichtung (10) wie einem Maschinenbett angeordnet ist.

7. Vorrichtung (10) nach einem der vorangehenden Ansprüche, wobei die Vorrichtung (10) wenigstens eine multidirektionale Messvorrichtung (44) umfasst, die dazu ausgebildet ist, die axiale Position des Referenzpunkts (RP1, RP2) der Werkstücke (28, 30) zu erfassen, wobei das jeweilige Werkstück (28, 30) oder wenigstens eines der Werkstücke (28, 30) nach Maßgabe der erfassten axialen Position des Referenzpunkts (RP1, RP2) des Werkstücks (28, 30) ausrichtbar ist.

8. Vorrichtung (10) nach einem der vorangehenden Ansprüche, wobei wenigstens einer der Werkstückträger (24, 26) linear in Richtung seiner Werkstückträgerachse (A1, A2) verfahrbar ist, wobei vorzugsweise die Vorrichtung (10) ferner wenigstens eine Werkstückträgerlinearführung (48) umfasst, die den wenigstens einen Werkstückträger (24, 26) linear verfahrbar lagert.

9. Vorrichtung (10) nach einem der vorangehenden Ansprüche, wobei die Werkstücke (28, 30) in den Werkstückträgern (24, 26) zum Ausrichten der Referenzpunkte (RP1, RP2) der Werkstücke (28, 30) entlang der jeweiligen Werkstückträgerachse (A1, A2) in unterschiedlichen axialen Positionen anordenbar sind, ferner als optionales Merkmal umfassend wenigstens einen Werkstückgreifer (42), der dazu eingerichtet ist, ein in einen Werkstückträger (24, 26) einzusetzendes Werkstück (28, 30) axial auszurichten, wobei weiter vorzugsweise der Werkstückgreifer (42) dazu eingerichtet ist, ein in den Werkstückträger (24, 26) einzusetzendes Werkstück (28, 30) an einer vorbestimmten Position des Werkstücks (28, 30) zu greifen und in Richtung der Werkstückträgerachse (A1, A2) jeweils mit im Wesentlichen gleich positionierten Referenzpunkten (RP1, RP2) in den Werkstückträger (24, 26) für die Bearbeitungsposition einzusetzen.

10. Vorrichtung (10) nach einem der vorangehenden Ansprüche, wobei die Werkzeugträgeranordnung (14) relativ zu der Werkstückträgeranordnung (12) um eine Schwenkachse (C1) verschwenkbar ist, wobei vorzugsweise die Schwenkachse (C1) orthogonal zu mindestens einer der Werkstückträgerachsen (A1, A2) und/oder orthogonal zu mindestens einer der Werkzeugträgerachsen (L1, L2) angeordnet ist, wobei optional die Werkzeugträgeranordnung (14) und/oder die Werkstückträgeranordnung (12) jeweils eine Schwinge (15) umfasst, die um die Schwenkachse (C1) verschwenkbar ist.

11. Vorrichtung (10) nach einem der vorangehenden Ansprüche, wobei die Werkstückträger (24, 26) Werkstückspindeln umfassen, die jeweils eine rotierende Bewegung der Werkstücke (28, 30) um die jeweilige Werkstückträgerachse (A1, A2) ermöglichen.

12. Vorrichtung (10) nach einem der vorangehenden Ansprüche, ferner umfassend eine erste Verschleißmessvorrichtung (52), die dazu ausgebildet ist, die Geometrie des ersten Bearbeitungswerkzeugs (36) zu erfassen, und eine zweite Verschleißmessvorrichtung (54), die dazu ausgebildet ist, die Geometrie des zweiten Bearbeitungswerkzeugs (38) zu erfassen, ferner als optionales Merkmal umfassend eine Abrichtvorrichtung (56), die dazu ausgebildet ist, die Bearbeitungswerkzeuge (36, 38) insbesondere zum Ausgleich von unterschiedlichem Verschleiß der Bearbeitungswerkzeuge (36, 38) abzurichten, wobei ferner als optionales Merkmal wenigstens einer von Werkstückträger (24, 26) oder Werkzeugträger (32, 34) eine Ausgleichsvorrichtung zum Ausgleich von Verschleiß aufweist, wobei insbesondere als optionales Merkmal die Ausgleichsvorrichtung am Werkstückträger (24, 26) angeordnet ist und eine Positioniereinrichtung, insbesondere mit zwei Positioniereinheiten (62, 64), umfasst, die dazu ausgebildet ist, die erste Werkstückträgerachse (A1) oder die zweite Werkstückträgerachse (A2) insbesondere zum Ausgleich von unterschiedlichem Verschleiß der Bearbeitungswerkzeuge (36, 38) auszurichten.

13. Verfahren zum Bearbeiten von gleichartigen Werkstücken (28, 30) in einer Bearbeitungsposition, insbesondere zum Schärfen von Werkstücken (28, 30) mit Schneiden für die spanabhebende Bearbeitung, wie beispielsweise Bohrer, Fräser oder dergleichen, wobei das Verfahren vorzugsweise mit einer Vorrichtung (10) nach einem der vorangehenden Ansprüche durchgeführt wird,
wobei jedes Werkstück (28, 30) eine Werkstückachse und einen bezüglich der Werkstückachse vordefinierten Referenzpunkt (RP1, RP2) aufweist,
wobei die Vorrichtung (10) umfasst:
eine Werkstückträgeranordnung (12) mit einer Mehrzahl von Werkstückträgern (24, 26), wobei jeder Werkstückträger (24, 26) dazu ausgebildet ist, jeweils eines der gleichartigen Werkstücke (28, 30) aufzunehmen, wobei jeder Werkstückträger (24, 26) jeweils eine Werkstückträgerachse (A1, A2) aufweist, wobei jedes Werkstück (28, 30) im zugeordneten Werkstückträger (24, 26) derart aufnehmbar ist, dass die Werkstückträgerachse (A1, A2) und die Werkstückachse im Wesentlichen zusammenfallen,
wobei die Werkstückträgerachsen (A1, A2) der Mehrzahl von Werkstückträgern (24, 26) in vorbestimmter Ausrichtung zueinander angeordnet sind,
eine Werkzeugträgeranordnung (14) mit einer Mehrzahl von Werkzeugträgern (32, 34), wobei jeder Werkzeugträger (32, 34) dazu ausgebildet ist, ein Bearbeitungswerkzeug (36, 38) aufzunehmen, und wobei die Werkzeugträger (32, 34) jeweils eine Werkzeugträgerachse (L1, L2) aufweisen, und wobei die Werkzeugträgerachsen (L1, L2) in vorbestimmter Ausrichtung zueinander angeordnet sind,
wobei beim Aufnehmen der Werkstücke (28, 30) in den zugeordneten Werkstückträgern (24, 26) der Werkstückträgeranordnung (12) die Referenzpunkte (RP1, RP2) der Werkstücke (28, 30) relativ zueinander bezüglich der Werkstückträgerachsen (A1, A2) im Wesentlichen einheitlich ausgerichtet werden.

14. Verfahren nach Anspruch 13, wobei die in den Werkstückträger (24, 26) aufgenommenen Werkstücke (28, 30) von den in dem Werkzeugträger (32, 34) aufgenommenen Bearbeitungswerkzeugen (36, 38) parallel und/oder synchron bearbeitet werden, wobei insbesondere als optionales Merkmal die einzelnen Referenzpunkte (RP1, RP2) der in der Mehrzahl von Werkstückträgern (24, 26) aufgenommenen Werkstücke (28, 30) in der Bearbeitungsposition im Wesentlichen auf einer ersten gemeinsamen Geraden (G1) angeordnet werden, die senkrecht zu den Werkstückträgerachsen (A1, A2) angeordnet ist, wobei als optionales Merkmal die Bearbeitungswerkzeuge Werkzeugreferenzpunkte (WZ1, WZ2) aufweisen, die für die Bearbeitungsposition im Wesentlichen entlang einer zweiten gemeinsamen Geraden (G2) ausgerichtet werden, die senkrecht zu den Werkzeugträgerachsen (L1, L2) angeordnet ist.

15. Verfahren nach einem der Ansprüche 13 oder 14, wobei die Vorrichtung (10) wenigstens eine Referenzfläche (40, 140) umfasst, nach Maßgabe derer die Werkstücke (28, 30) mit ihren jeweiligen Referenzpunkten (RP1, RP2) ausgerichtet werden, insbesondere bezüglich der jeweiligen Werkstückträgerachsen (A1, A2, wobei als optionales Merkmal die Vorrichtung (10) wenigstens eine multidirektionale Messvorrichtung (44) umfasst, die die axiale Position des Referenzpunkts (RP1, RP2) wenigstens eines Werkstücks (28, 30) erfasst, wobei das jeweilige Werkstück (28, 30) oder wenigstens eines der Werkstücke (28, 30) nach Maßgabe der erfassten axialen Position des Referenzpunkts (RP1, RP2) des Werkstücks (28, 30) ausgerichtet wird, wobei insbesondere als optionales Merkmal der jeweilige Werkstückträger (24, 26) des Werkstücks (28, 30) oder wenigstens einer der Werkstückträger (24, 26) nach Maßgabe der erfassten axialen Position des Referenzpunkts (RP1, RP2) des Werkstücks (28, 30) linear entlang seiner Werkstückträgerachse (A1, A2) verfahren wird.

16. Verfahren nach einem der Ansprüche 13 bis 15, wobei Werkstücke (28, 30) in den Werkstückträgern (24, 26) zum Ausrichten der Referenzpunkte (RP1, RP2) der Werkstücke (28, 30) entlang der jeweiligen Werkstückträgerachse (A1, A2) in unterschiedlichen axialen Positionen anordenbar sind, ferner als optionales Merkmal umfassend wenigstens einen Werkstückgreifer (42), der ein in einen Werkstückträger (24, 26) einzusetzendes Werkstück (28, 30) für die Bearbeitungsposition axial ausrichtet, wobei insbesondere als optionales Merkmal der Werkstückgreifer (42) ein in den Werkstückträger (24, 26) einzusetzendes Werkstück (28, 30) an einer vorbestimmten Position des Werkstücks (28, 30) greift und in Richtung der Werkstückträgerachse (A1, A2) mit gleich positioniertem Referenzpunkt (RP1, RP2) in den Werkstückträger (24, 26) für die Bearbeitungsposition einsetzt.
